(19) Europäisches Patentamt
European Patent Office
Office européen des brevets

(11) **EP 4 343 281 B1**

(12) # FASCICULE DE BREVET EUROPEEN

(45) Date de publication et mention de la délivrance du brevet:
**18.09.2024   Bulletin 2024/38**

(21) Numéro de dépôt: **23198708.2**

(22) Date de dépôt: **21.09.2023**

(51) Classification Internationale des Brevets (IPC):
***G01C 19/5691*** *(2012.01)*

(52) Classification Coopérative des Brevets (CPC):
**G01C 19/5691**

(54) **PROCEDE DE MESURE D'UNE VITESSE ANGULAIRE DE ROTATION ET/OU D'UNE POSITION ANGULAIRE**

VERFAHREN ZUR MESSUNG EINER DREHGESCHWINDIGKEIT UND/ODER EINER WINKELPOSITION

METHOD FOR MEASURING AN ANGULAR SPEED AND/OR AN ANGULAR POSITION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.09.2022   FR 2209684**

(43) Date de publication de la demande:
**27.03.2024   Bulletin 2024/13**

(73) Titulaire: **Jxsens**
**69130 Ecully (FR)**

(72) Inventeurs:
- **BEITIA, José Louis**
  **69002 LYON (FR)**
- **SAGGIN, Fabricio**
  **69100 VILLEURBANNE (FR)**

(74) Mandataire: **Cabinet Didier Martin et al**
**Les Terrasses des Bruyères - Bâtiment C**
**314 C, Allée des Noisetiers**
**69760 Limonest (FR)**

(56) Documents cités:
**EP-A1- 3 096 111**

- **WANG XU ET AL: "The modeling of hemispherical resonator gyro and its space applications", SEVENTH INTERNATIONAL SYMPOSIUM ON PRECISION ENGINEERING MEASUREMENTS AND INSTRUMENTATION, SPIE, 1000 20TH ST. BELLINGHAM WA 98225-6705 USA, vol. 8321, no. 1, 1 December 2011 (2011-12-01), pages 1 - 9, XP060025010, DOI: 10.1117/12.903641**

**Description**

La présente invention se rapporte au domaine technique général des capteurs de rotation, et plus précisément à celui des capteurs gyroscopiques basés sur les forces de Coriolis pour mesurer des vitesses de rotation et/ou des positions angulaires, tels que les gyromètres ou gyroscopes vibrants à effet Coriolis dits CVG (Coriolis Vibratory Gyroscope).

La présente invention concerne plus particulièrement un procédé de mesure de la vitesse angulaire et/ou de la position angulaire, selon un axe de rotation par un capteur gyroscopique axisymétrique vibrant.

Les gyromètres à structure vibrante, destinés à mesurer des vitesses angulaires, sont bien connus. Ces gyromètres vibrants reposent sur l'effet Coriolis qui conduit un objet vibrant (le résonateur) à subir une force, lorsque ce dernier tourne, pour continuer à vibrer dans un seul et même plan dit inertiel. L'application d'une force opposée permet de faire tourner le plan de vibration avec l'objet. La vibration est alors immobile par rapport au repère tournant lié à l'objet et la mesure de cette force permet de déterminer la vitesse angulaire.

Les résonateurs axisymétriques, c'est-à-dire présentant une symétrie de révolution autour d'un axe, présentent de plus la propriété qu'en l'absence de l'application d'une force opposée aux forces de Coriolis, la mesure de la position du repère lié à l'objet tournant par rapport à la vibration fixe donne directement l'information de position angulaire de l'objet. On parle alors de fonctionnement en mode gyroscope, par opposition au précédent mode de fonctionnement, appelé mode gyromètre.

De tels CVG axisymétriques utilisent en général un résonateur de forme hémisphérique, ou cylindrique, ou annulaire ou polygonale à $8 \times k$ côtés de longueurs identiques equi-répartis angulairement avec k un nombre entier non nul. Dans ce cas, le résonateur possède deux modes de résonance de fréquences identiques appelés modes primaire et secondaire ayant la propriété d'être modalement orthogonaux, ce qui se traduit par un angle de 45 degrés dans l'espace physique du résonateur.

EP 3 096 111 A1 divulgue un capteur gyroscopique axisymétrique avec un mode primaire et un mode secondaire de résonance. U

L'article de WANG XU ET AL, "The modeling of hemispherical resonator gyro and its space applications", paru dans le symposium SEVENTH INTERNATIONAL SYMPOSIUM ON PRECISION ENGINEERING MEASUREMENTS AND INSTRUMENTATION, SPIE, 1000 20TH ST. BELLINGHAM WA 98225-6705 USA, vol. 8321, no. 1, 1 décembre 2011 (2011-12-01), pages 1-9, divulgue que les capteurs gyroscopiques axisymétriques comprennent les quatre boucles de contrôle : boucle de contrôle de l'amplitude de vibration, boucle à phase asservie générant des signaux harmoniques de référence en phase et en quadrature de phase, boucle de compensation des forces de Coriolis et boucle de contrôle de la quadrature du mode de résonance perpendiculaire à la vibration.

Ces CVG axisymétriques embarquent une électronique avancée permettant le contrôle de la vibration, c'est-à-dire le mode de vibration primaire, ainsi que le mode de vibration secondaire, ou une combinaison de ces modes. Cette électronique met également en oeuvre des algorithmes visant à identifier et supprimer toute dérive de sorte à obtenir la plus grande précision de mesure possible.

Les algorithmes de contrôle, aussi appelés algorithmes de mise en oeuvre, sont généralement fondés sur des principes présentés dans le guide IEEE 1431-2004, intitulé « IEEE Standard Spécification Format Guide and Test Procédure for Coriolis Vibratory Gyros ». Ces algorithmes implémentent classiquement quatre boucles de contrôle de la vibration et sont appelés FTR (Force To Rebalance) pour une mise en oeuvre gyromètre, et WA (Whole Angle) pour une mise en oeuvre gyroscope.

Concernant les algorithmes de correction des erreurs senseurs, généralement associées au biais et au facteur d'échelle, les plus rudimentaires procèdent hors boucles de contrôle (ou en aval des boucles) par la simple application de polynômes de compensation fonction de la température, et les plus complexes, utilisant les propriétés des CVG à modes de vibration symétriques décrits ci-dessus, interviennent dans les boucles de contrôle. Ces algorithmes complexes nécessitent généralement de faire tourner le plan de vibration alors qu'aucune rotation inertielle n'est appliquée au résonateur. On parle alors de rotation électrique. Pour obtenir cela, le mode gyroscope est implémenté, avec l'ajout d'une force de précession électrique poussant électriquement la vibration de manière contrôlée tout en maintenant l'amplitude de vibration constante. La compensation des erreurs passe alors par la mise en place de matrices de correction sur les signaux de détection et d'excitation, suivies d'autres matrices de correction visant les erreurs physiques du senseur lui-même. Cependant, et en particulier lorsque d'excellentes performances sont recherchées, les algorithmes reposant sur la mise en oeuvre de ces matrices de rotation exigent de fortes puissances de calcul, et restent perfectibles.

La présente invention vient améliorer la situation.

Les objets assignés à l'invention sont atteints à l'aide d'un procédé de mesure d'une vitesse angulaire d'une rotation et/ou d'une position angulaire, selon un axe sensible d'un capteur gyroscopique vibrant axisymétrique, comprenant la mise en oeuvre, par des moyens de traitement de données du capteur gyroscopique vibrant axisymétrique, d'étapes de :

(a) Réception, depuis une instrumentation de couplage électromécanique d'un résonateur du capteur gyroscopique vibrant axisymétrique, d'un premier signal de détection d'une vibration dudit résonateur selon un mode primaire de résonance, et d'un deuxième signal de détection d'une vibration dudit résonateur selon un mode secondaire de résonance ; chacun du premier et du deuxième signal de détection comprenant une composante en phase et une composante en quadrature de phase ; ledit résonateur étant mis en vibration via ladite instrumentation de couplage électromécanique selon un premier signal d'excitation du mode primaire de résonance et un deuxième signal d'excitation du mode secondaire de résonance ;

(b) Mise en oeuvre d'au moins quatre boucles de contrôle dont :

○ une première boucle de contrôle de l'amplitude de la vibration du résonateur selon l'axe du mode primaire de résonance, utilisant un premier régulateur ;
○ une deuxième boucle à phase asservie générant des signaux harmoniques de référence en phase et en quadrature de phase du mode primaire et/ou du mode secondaire, permettant de séparer lesdites composantes en phase et en quadrature de phase des signaux de détection, utilisant un deuxième régulateur ;
○ une troisième boucle de compensation des forces de Coriolis due à ladite rotation du résonateur excitant un mode de résonance perpendiculaire à la vibration, utilisant un troisième régulateur ;
○ une quatrième boucle de contrôle de la quadrature dudit mode de résonance perpendiculaire à la vibration du résonateur utilisant un quatrième régulateur ;

(c) Estimation de ladite vitesse angulaire et/ou de ladite position angulaire, en fonction des sorties des régulateurs ;

caractérisé en ce que la vibration est contrainte par les premier et deuxième signaux d'excitation de sorte à présenter un angle azimutal dans la base modale orthogonale des modes primaire et secondaire, le premier régulateur cherchant à minimiser la différence entre la composante en phase du premier signal de détection et le produit, par un premier coefficient fonction de l'angle azimutal, d'une amplitude de consigne de la vibration du résonateur, et le troisième régulateur cherchant à minimiser la différence entre la composante en phase du deuxième signal de détection et le produit, par un deuxième coefficient fonction de l'angle azimutal, de ladite amplitude de consigne de la vibration du résonateur, la première boucle étant également une boucle de compensation des forces de Coriolis et la troisième boucle étant également une boucle de contrôle en amplitude de la vibration du résonateur selon l'axe du mode secondaire de résonance.

Les objets assignés à l'invention sont également atteints à l'aide d'un capteur gyroscopique vibrant axisymétrique pour la mesure d'une vitesse angulaire ou d'une rotation selon un axe sensible, comprenant :

- un résonateur présentant une instrumentation de couplage électromécanique pour la mise en vibration dudit résonateur selon un premier signal d'excitation issu d'un mode primaire de résonance et un deuxième signal d'excitation issu d'un mode secondaire de résonance ;
- des moyens de traitement de données configurés pour :

○ recevoir, depuis l'instrumentation de couplage électromécanique, un premier signal de détection d'une vibration dudit résonateur selon le mode primaire de résonance, et d'un deuxième signal de détection d'une vibration dudit résonateur selon le mode secondaire de résonance ; chacun du premier et du deuxième signal de détection comprenant une composante en phase et une composante en quadrature de phase ;
○ mettre en oeuvre au moins quatre boucles de contrôle dont :

■ une première boucle de contrôle de l'amplitude de la vibration du résonateur selon l'axe du mode primaire de résonance, utilisant un premier régulateur ;
■ une deuxième boucle à phase asservie générant des signaux harmoniques de référence en phase et en quadrature de phase du mode primaire et/ou du mode secondaire, permettant de séparer lesdites composantes en phase et en quadrature de phase des signaux de détection, utilisant un deuxième régulateur;
■ une troisième boucle de compensation des forces de Coriolis due à ladite rotation du résonateur excitant un mode de résonance perpendiculaire à la vibration, utilisant un troisième régulateur ;
■ une quatrième boucle de contrôle de la quadrature dudit mode de résonance perpendiculaire à la vibration du résonateur utilisant un quatrième régulateur ;

o estimer ladite vitesse angulaire et/ou la position angulaire en fonction des sorties des régulateurs ;

caractérisé en ce que la vibration est contrainte par les premier et deuxième signaux d'excitation de sorte à présenter un angle azimutal dans la base modale orthogonale des modes primaire et secondaire, le premier régulateur cherchant à minimiser la différence entre la composante en phase du premier signal de détection et le produit, par un premier coefficient fonction de l'angle azimutal, d'une amplitude de consigne de la vibration du résonateur, et le troisième régulateur cherchant à minimiser la différence entre la composante en phase du deuxième signal de détection et le produit, par un deuxième coefficient fonction de l'angle azimutal, de ladite amplitude de consigne de la vibration du résonateur, la première boucle étant également une boucle de compensation des forces de Coriolis et la troisième boucle étant également une boucle de contrôle en amplitude de la vibration du résonateur selon l'axe du mode secondaire de résonance.

Les objets assignés à l'invention sont par ailleurs atteints à l'aide d'un produit programme d'ordinateur ou programme d'un circuit logique programmable comprenant des instructions de code pour l'exécution d'un procédé selon l'invention, de mesure de la vitesse angulaire d'une rotation, ou de position angulaire, selon un axe sensible d'un capteur gyroscopique vibrant axisymétrique, et permettant à partir de ces mesures d'en déduire des corrections des erreurs du senseur applicables aux boucles de contrôle de la vibration pour améliorer les performances lorsque ledit programme est exécuté sur un ordinateur ou un circuit logique programmable au sein de l'électronique de mise en oeuvre du capteur.

Les objets assignés à l'invention sont enfin atteints à l'aide d'un moyen de stockage lisible par un équipement informatique ou un circuit logique programmable sur lequel est enregistré un produit programme d'ordinateur ou un produit programme d'un circuit logique programmable comprenant des instructions de code et des paramètres fixes stockés pour l'exécution d'un procédé selon l'invention de mesure de la vitesse angulaire d'une rotation, ou de mesure de la position angulaire, selon un axe sensible d'un capteur gyroscopique vibrant axisymétrique, et permettant à partir de ces mesures d'en déduire des corrections des erreurs du senseur stockées sur un moyen de stockage lisible par un équipement informatique ou un circuit logique programmable applicables aux boucles pour améliorer les performances lorsque ledit programme est exécuté sur un ordinateur ou un circuit logique programmable au sein de l'électronique de mise en oeuvre du capteur.

D'autres particularités et avantages de l'invention apparaîtront plus en détails à la lecture de la description détaillée qui suit, en référence aux dessins annexés, donnés à titre d'exemples purement illustratifs et non limitatifs, dans lesquels :

La Figure 1 illustre, selon une vue schématique en perspective, un capteur gyroscopique vibrant axisymétrique.

La Figure 2 illustre, selon une vue schématique du dessus, un résonateur du capteur gyroscopique vibrant.

La Figure 3 représente un logigramme d'un mode FTR connu.

La Figure 4 illustre comment les commandes générées par les boucles de contrôle varient lorsque l'angle électrique azimutal θ est non nul.

La Figure 5 représente un logigramme d'un mode FTR, dit FTR toute attitude, conformément à un mode de réalisation préféré du procédé selon l'invention.

La Figure 6 représente un logigramme d'un mode FTR conformément à un autre mode de réalisation préféré du procédé selon l'invention, ce mode FTR étant appelé FTR toute attitude continu, FTR TT.

La Figure 7 représente un logigramme d'une cinquième boucle de contrôle pour un mode gyroscope WA conformément à un mode de réalisation préféré du procédé selon l'invention.

La Figure 8 illustre les étapes d'un mode de réalisation préféré du procédé selon l'invention.

*Capteur gyroscopique vibrant axisymétrique*

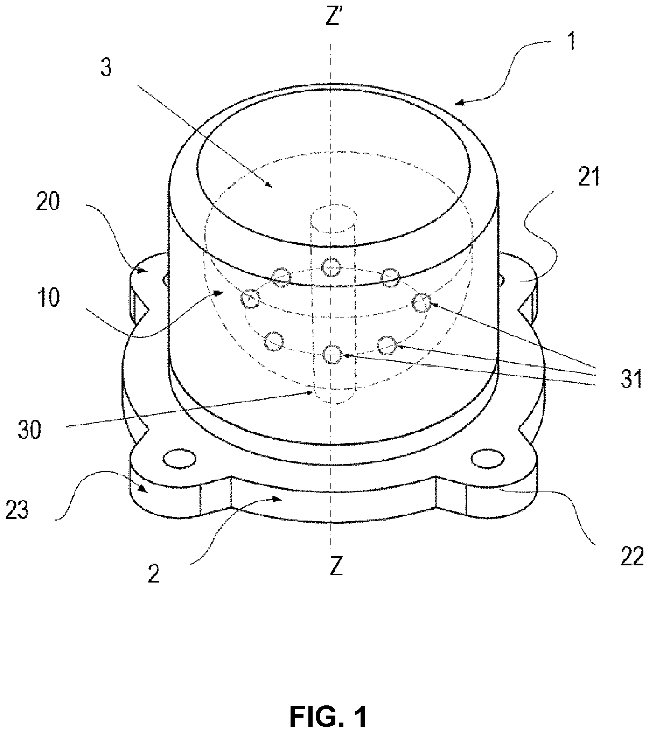

L'invention concerne un procédé de mesure de la vitesse angulaire et/ou de la position angulaire, selon un axe (dit axe sensible) par un capteur gyroscopique vibrant 1 axisymétrique par rapport à cet axe sensible, représenté à titre d'exemple en figure 1, qui forme avantageusement un capteur gyroscopique vibrant à effet Coriolis, c'est-à-dire un capteur de rotation basé sur les forces de Coriolis. Le capteur gyroscopique vibrant 1 est aussi appelé capteur inertiel vibrant de type CVG (Coriolis Vibratory Gyro). On parle généralement de gyroscope lorsque l'on cherche à mesurer directement une position angulaire et de gyromètre lorsque l'on cherche juste à mesurer la vitesse angulaire, étant entendu que ledit gyromètre peut aussi indirectement déterminer un angle par intégration des mesures de vitesse angulaire. Cependant, dans le cas des CVG axisymétriques, cette intégration peut être faite tout naturellement, ou directement, par l'élément vibrant lui-même (le résonateur 3 décrit ci-après), lorsque l'électronique de contrôle implémente de manière préférée un mode opératoire gyroscope, appelé aussi WA (Whole Angle), comme exposé ci-après.

Comme illustré à la figure 1, le capteur gyroscopique vibrant 1 comprend généralement une embase 2, qui est par exemple métallique, ou en matériau céramique, et assure une fonction de support. L'embase 2 constitue ainsi avantageusement un socle. L'embase 2 présente avantageusement globalement une forme de plaque avec deux faces opposées, séparées par l'épaisseur de la plaque, qui sont pourvues de conformations convexes et concaves formant des logements dont les fonctions seront précisées dans ce qui suit. L'embase 2 est avantageusement pourvue de moyens de fixation qui peuvent se présenter par exemple sous la forme d'une pluralité d'oreilles traversées chacune par un orifice afin de permettre une fixation par vissage du capteur 1 à un bâti, par exemple au bâti d'une centrale inertielle ou de tout autre équipement utilisé pour la navigation, le guidage ou le contrôle d'un objet mobile dans l'espace. Comme illustré par la figure 1, les moyens de fixation 20, 21, 22, 23 de l'embase 2 peuvent être conçus pour assurer une fixation symétrique par rapport à l'axe principal de symétrie du résonateur Z-Z' en étant répartis équiangulairement autour de cet axe central qui est avantageusement normal au plan moyen dans lequel s'étendent les oreilles de fixation et/ou la plaque formant l'embase 2. De préférence, l'embase 2 présente dans ce cas une symétrie de rotation discrète du quatrième ordre selon l'axe central Z-Z'. Ledit axe central Z-Z' correspond à l'axe sensible selon lequel le capteur gyroscopique vibrant 1 est conçu pour mesurer une vitesse angulaire ou une rotation angulaire. D'autres cas sont possibles, comme par exemple une embase 2 conçue pour assurer une fixation isostatique avec trois fixations réparties équi-angulairement autour de l'axe central Z-Z'. De préférence, l'embase 2 présente dans ce cas une symétrie de rotation discrète du troisième ordre selon l'axe central Z-Z'.

Avantageusement, le capteur gyroscopique vibrant 1 selon l'invention comprend un capot 10 en forme de cloche, qui vient coiffer la structure vibrante (le résonateur 3 décrit ci-après) du capteur 1. Ledit capot 10 est réalisé par exemple en un matériau métallique, et est avantageusement destiné à coopérer avec l'embase 2 pour délimiter avec cette dernière un espace interne destiné à accueillir la structure vibrante (le résonateur 3 décrit ci-après) du capteur gyroscopique vibrant 1, afin de l'isoler et la protéger de l'environnement extérieur. Le logement ainsi formé par l'embase 2 et le capot 10 peut avantageusement être étanche aux gaz, grâce à la mise en oeuvre de moyens d'étanchéité appropriés disposés à l'interface entre le capot 10 et l'embase 2, ce qui permet de contrôler l'atmosphère régnant au sein du logement en question.

Le capteur gyroscopique vibrant 1 comprend comme expliqué un résonateur 3 qui forme un corps d'épreuve destiné à vibrer en réponse à une excitation. Le résonateur 3 inclut, comme illustré aux figures, un pied central 30 par lequel le résonateur 3 est attaché à ladite embase 2. En d'autres termes, le capteur gyroscopique vibrant 1 comprend des moyens de liaison mécanique qui assurent une fixation du pied central 30 à l'embase 2. Avantageusement, lesdits moyens de liaison mécanique assurent une liaison encastrement entre le pied central 30 et l'embase 2, de façon à immobiliser le pied central 30 relativement à l'embase 2. Les moyens de liaison mécanique présentent par exemple un caractère définitif, c'est-à-dire qu'ils sont indémontables, et peuvent consister par exemple en un assemblage par collage, soudage ou brasage du pied 30 et de l'embase 2.

Le résonateur 3 présente une portion distale de forme en particulier hémisphérique, cylindrique, annulaire ou polygonale à 8×k côtés de longueurs identiques equi-répartis angulairement avec k un nombre entier non nul.

Classiquement, le capteur gyroscopique vibrant 1 comprend une instrumentation de couplage électromécanique 31, attachée à une partie proximale du résonateur 3 (autour du pied 30) comprenant elle-même :

- une pluralité de dispositifs d'excitation, dit « forcers », pour exciter ledit résonateur 3 en vibration, et notamment lesdits modes de vibration symétriques d'ordre deux, primaire et secondaire, de déformée elliptique, de ladite portion distale du résonateur 3.
- une pluralité de dispositifs de détection, dit « pickoffs », pour détecter des vibrations du résonateur 3, et en particulier les vibrations de ladite portion distale, excitée par les dispositifs d'excitation.

Ce positionnement des dispositifs d'excitation et de détection au niveau de la portion proximale permet notamment de limiter les éventuels effets d'amortissement provoqués par l'instrumentation de couplage électromécanique 31 et susceptibles de générer des erreurs de mesure.

Lesdits dispositifs d'excitation et lesdits dispositifs de détection peuvent être de différentes natures, électromagnétique, électrostatique, optique, ou par exemple des éléments piézoélectriques. On parle généralement d'électrodes. Les éléments 31 en question sont ainsi conçus pour d'une part impartir, par l'intermédiaire de la portion proximale à laquelle ils sont fixés des vibrations à la portion distale du résonateur 3, pour exciter en particulier les modes de résonance de vibration symétriques d'ordre deux, primaire et secondaire, de déformée elliptique, et pour d'autre part détecter, là encore par l'intermédiaire de la portion proximale à laquelle ils sont fixés, les vibrations de la portion distale. Les éléments 31 assurent ainsi une double fonction, d'excitation vibratoire d'une part et de détection vibratoire d'autre part. La nature des éléments 31 d'excitation peut être différente de la nature des éléments de détection. Ils participent pleinement au contrôle de la vibration.

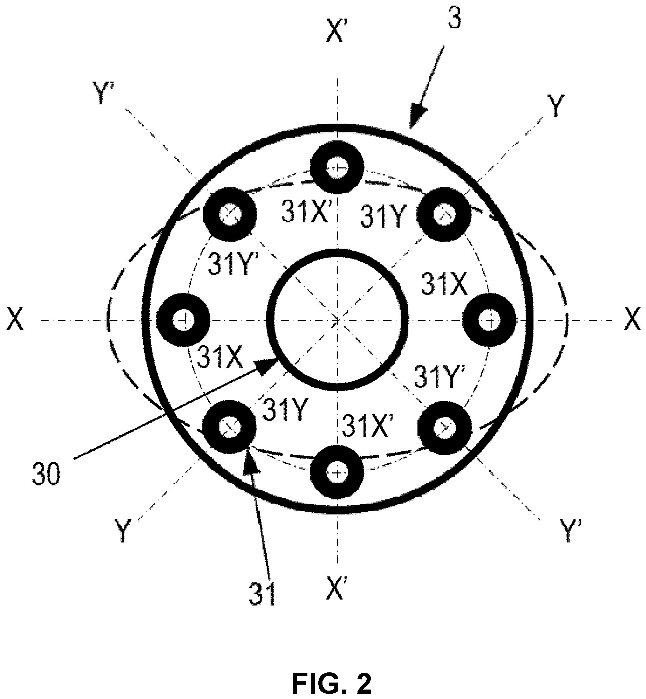

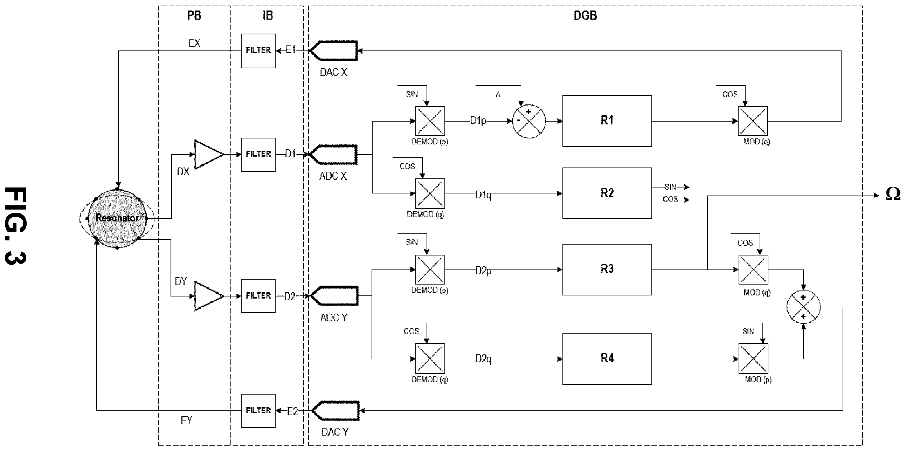

Indépendamment du nombre d'éléments 31 utilisés pour la mise en oeuvre et le contrôle des modes de résonance primaire et secondaire du résonateur, il est connu que pour les capteurs gyroscopiques axisymétriques vibrants, quatre signaux suffisent à la réalisation de ce contrôle. Deux signaux sont des signaux d'excitation, notés E1 et E2 sur la Figure 3, et deux signaux sont des signaux de détection, notés D1 et D2 sur la Figure 3. La distribution de ces signaux depuis ou vers le résonateur 3 à partir de l'électronique de mise en oeuvre peut être réalisée de différentes manières, et ces réalisations définissent le nombre des éléments de couplage électromécanique 31 employés. Préférentiellement, le nombre des éléments de couplage électromécanique 31 est un multiple entier de huit comme illustré sur la figure 1 et la figure 2. Mais ce nombre peut plus simplement devenir un multiple de deux, ou égal à deux, lorsqu'une moindre performance est acceptable, en particulier lorsqu'un multiplexage des signaux de détection et d'excitation est acceptable.

En référence à la figure 2, les éléments 31 (notés 31X, 31X', 31Y et 31Y', voir ci-après) sont répartis préférentiellement de manière régulière sur la circonférence proximale du résonateur 3. Par exemple, si l'on a 8 éléments comme représentés, ils sont espacés de 45°, i.e. placés à 0° et 180° pour la paire [31X], 45° et 225° pour la paire [31Y], 90° et 270° pour la paire [31X'], et enfin 135° et 315° pour la paire [31Y'].

Le capteur gyroscopique vibrant 1 comprend en outre des moyens de traitement de données 11 (i.e. du signal) connectés aux éléments de couplage électromécanique 31 via une électronique d'interface et de conditionnement des signaux, en particulier une électronique numérique dite DGB, Digital Board, une carte électronique de proximité PB, et une carte d'interface IB. Les moyens DGB pourront inclure un processeur, un FPGA (Field-Programmable Gate Array), un microcontrôleur, un ASIC (Application-Specific Integrated Circuit), etc, ainsi que les mémoires et horloges associées.

De manière classique la carte d'interface PB (ou carte de proximité, ou Proximity Board) est une carte transformant les signaux de détection issus des éléments 31 de couplage électromécanique hautes impédances DX et DY attachés au résonateur en signaux basses impédances pouvant ainsi cheminer vers l'électronique DGB sans perturbation, et transférant les signaux d'excitation EX et EY vers les éléments d'excitation 31 attachés au résonateur. La carte d'interface IB (Interface Board) est une carte recevant les signaux de détection depuis PB et les adaptant et/ou les filtrant avant conversion analogique numérique par des convertisseurs analogique vers digital (Analog to Digital Converter, ADC) en entrée du DGB (on note D1 et D2 les versions adaptées/filtrées de DX et DY), et adaptant et/ou filtrant les signaux d'excitation (noté E1 et E2) reçus des convertisseurs digital vers analogique (Digital to Analog Converter, DAC) en sortie de DGB avant de les transmettre à l'électronique PB puis au résonateur (alors notés EX et EY comme expliqué). Pour l'adaptation d'impédance des signaux de détection on peut également avoir des amplificateurs opérationnels (AOP) sur les signaux de détections DX, DY dans PB.

*Mode FTR*

On connait un mode opératoire d'un capteur gyroscopique vibrant 1, mode dit FTR (Force To Rebalance), dans lequel la vibration est contrainte dans la direction de référence définie par les éléments 31 du résonateur 3. Le système de contrôle associé à ce mode est représenté en figure 3. La vibration est alors alignée avec le mode primaire. Comme expliqué les modes primaire et secondaire ont la propriété d'être modalement orthogonaux de sorte qu'ils peuvent former une base modale orthogonale définissant un plan modal (espace modal de dimension deux) du système. En notant $\theta$ l'angle azimutal définissant l'axe de la vibration dans cette base modale orthogonale des modes primaire et secondaire (i.e. par rapport à l'axe des abscisses du plan modal), on a ici $\theta=0°$.

En référence aux figures 2 et 3, dans une configuration à huit éléments de couplage électromécanique, dans le domaine physique, l'orientation du grand axe de la vibration pour le mode primaire est alignée sur quatre premiers éléments, dont une paire 31X à 180° l'un de l'autre, et une autre paire 31X' également à 180° l'un de l'autre, la première paire étant écartée de la deuxième de 90° dans l'espace physique, et les deux paires étant positionnées le long des directions notées X et X' sur la figure 2. Le mode secondaire se déduit du mode primaire par une rotation de 45° dans l'espace physique ; ceci correspondant à une rotation de 90° dans le plan modal (i.e. $\theta=90°$). Ce mode est aussi aligné sur quatre autres éléments de couplage électromécanique, une paire 31Y, et une paire 31Y', les éléments d'une paire étant situés à 180° l'un de l'autre, les deux paires étant séparées de 90°, et chacune des paires étant alignée le long des directions notées Y et Y'. L'instrumentation de couplage électromécanique 31 reçoit le premier et le deuxième signal d'excitation EX et EY (inputs ou entrées, respectivement via les éléments 31X et 31Y), et produit le premier et le deuxième signal de détection DX et DY (outputs ou sorties, respectivement via les éléments 31X' et 31Y') qui vont pouvoir être interprétés par les moyens de traitement du signal et de données 11 après une normalisation et un filtrage dans la carte de proximité PB et/ou la carte d'interface IB.

En figure 2, on a représenté en pointillés la forme que prend le résonateur 3 lorsque la vibration est contrainte de sorte à être alignée avec le mode primaire, i.e. $\theta=0°$ dans le plan modal (on parlera par commodité de vibration contrainte dans la « direction $\theta=0°$ »), i.e. l'axe principal de la vibration coïncide avec la direction X-X de référence du résonateur 3 dans l'espace physique.

Lorsque le capteur gyroscopique vibrant 1 tourne autour de son axe sensible, les forces de Coriolis qui en résultent et qui agissent sur le résonateur excitent le mode secondaire.

Une boucle fermée ramène le mode secondaire de résonance à zéro, et la force requise pour annuler ce mode est proportionnelle à la vitesse angulaire (notée $\Omega$), perpendiculaire au plan de la Figure 2, ou encore, colinéaire à l'axe sensible du résonateur 3, d'où le nom « force to rebalance » (force pour rééquilibrer).

On peut remarquer ici que le principe décrit ci-dessus, s'appliquerait également au cas où chaque paire serait remplacée par un seul élément de couplage électromécanique. Dans ce cas, seuls quatre éléments de couplage électromécaniques seraient utilisés. Également, lorsque les éléments de mise en oeuvre numériques fonctionnent à une fréquence suffisamment élevée et bien supérieure à la fréquence du mode primaire entretenu, les éléments de couplage électromécaniques pourraient être utilisés en temps partagés, alternativement en mode excitation puis en mode détection. Dans ce cas, théoriquement, deux éléments de couplage électromécaniques suffiraient, au lieu de quatre, ou de huit, et l'un serait par exemple 31X et l'autre 31Y.

En référence à la figure 3, on a ainsi au moins 4 boucles de contrôle en mode FTR comprenant chacune un régulateur. Dans chaque boucle les signaux de détection en entrée sont démodulés de sorte à séparer une composante en phase et une composante en quadrature de phase. On les note respectivement D1p [composante en phase du premier signal de détection, i.e. composante en phase de la vibration selon le premier mode], D1q [composante en quadrature de phase du premier signal de détection, i.e. composante en quadrature de phase de la vibration selon le mode primaire], D2p [composante en phase du deuxième signal de détection, i.e. composante en phase de la vibration selon le mode secondaire], et D2q [composante en quadrature de phase du deuxième signal de détection, i.e. composante en quadrature phase de la vibration selon le mode secondaire]. Symétriquement, les sorties des régulateurs sont inversement remodulées pour obtenir les signaux d'excitation E1 et E2, ou EX et EY après filtrage.

La première boucle vise le contrôle en amplitude (amplitude de consigne notée A) sur la composante en phase du mode primaire déduite de la première donnée de détection DX. Elle met en oeuvre un régulateur R1 dont la sortie est la commande notée CA (contrôle d'amplitude) déterminant le premier signal d'excitation EX.

La deuxième boucle est une boucle à phase asservie (PLL, phase-locked loop) avec un régulateur R2 verrouillant le système sur la fréquence du mode primaire et générant, à partir de la composante en quadrature de phase du mode primaire déduite de la première donnée de détection DX, des signaux harmoniques de référence SIN et COS, respectivement en phase et en quadrature de phase avec le mode primaire. Ces signaux de référence sont utilisés dans toutes les boucles de contrôle pour la modulation des signaux de détection et la modulation des forces de contrôle appliquées au résonateur.

La troisième boucle est celle qui met en pratique la compensation de la force de Coriolis sur la composante en phase du mode secondaire déduite de la deuxième donnée de détection DY (ce contrôle vise à annuler cette phase du mode secondaire) avec un régulateur R3 qui produit en sortie la commande notée CP (contrôle de précession). Cette commande est proportionnelle à la vitesse angulaire $\Omega$.

La quatrième boucle vise le contrôle de quadrature sur la composante en quadrature de phase du mode secondaire déduite de la deuxième donnée de détection DY (ce contrôle vise à annuler cette quadrature de phase du mode secondaire) pour que l'oscillation du résonateur 3 reste une onde stationnaire qui se représente comme une ligne droite dans l'espace des modes, c'est-à-dire dans un repère orthogonal ayant comme axe des abscisses le mode primaire, et comme axe des ordonnées le mode secondaire. Elle met en oeuvre un régulateur R4 dont la sortie est la commande notée CQ (contrôle de la quadrature de la vibration).

Le deuxième signal d'excitation est déterminé par la somme des commandes CP et CQ.

Afin d'orienter la vibration dans une direction différente de la direction électrique azimutale $\theta$=0°, i.e. avec un angle non nul dans la base modale des modes primaire et secondaire, il est connu d'utiliser des matrices de rotations appliquées à la fois aux signaux de détection et aux signaux d'excitation. Ces matrices sont mises en place dans le traitement numérique, réalisé dans DGB par exemple, préférentiellement après les ADC pour la détection, et avant les DAC pour l'excitation, pour minimiser la charge de calcul en évitant des opérations de multiplication mathématiques portant sur des signaux harmoniques à la fréquence de la vibration du résonateur. Les points de consigne des régulateurs restent constants.

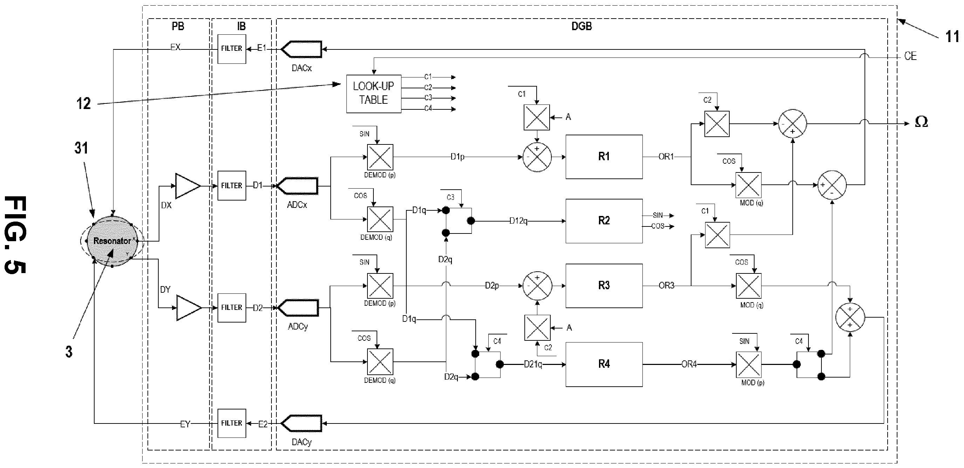

Le présent procédé met en oeuvre un nouveau mode FTR dit toute attitude, désigné FTR TT, qui permet par rapport à l'état de l'art décrit précédemment une réduction significative de la charge de calcul, et donc de la consommation, de la taille des composants et du coût global de l'électronique. L'expression « toute attitude » signifie que l'angle azimutal $\theta$ peut prendre toute valeur souhaitée entre 0 et 90°, voire 360°, sans pour autant utiliser des opérations mathématiques complexes. Pour reformuler, l'axe principal de la vibration peut être écarté d'un angle azimutal $\theta$ par rapport à la direction de référence modale définie préférentiellement par le mode primaire du résonateur 3, sans calculs complexes. Un mode de réalisation préféré de ce mode FTR TT est illustré par la figure 5, qui sera décrite ci-après.

Un cas limite est obtenu lorsque l'angle azimutal vaut 90°, c'est-à-dire $\theta$=90°. La vibration (mode primaire) est alors alignée sur les éléments 31Y, 31Y' et le mode secondaire est aligné sur les éléments 31X, 31X'.

Ce mode FTR « à la carte » s'avère très efficace et permet notamment d'implémenter diverses techniques d'identification des erreurs senseurs, avec in fine la calibration de ces erreurs selon un mode dit d'auto-calibration du biais.

*Principe du mode FTR toute attitude*

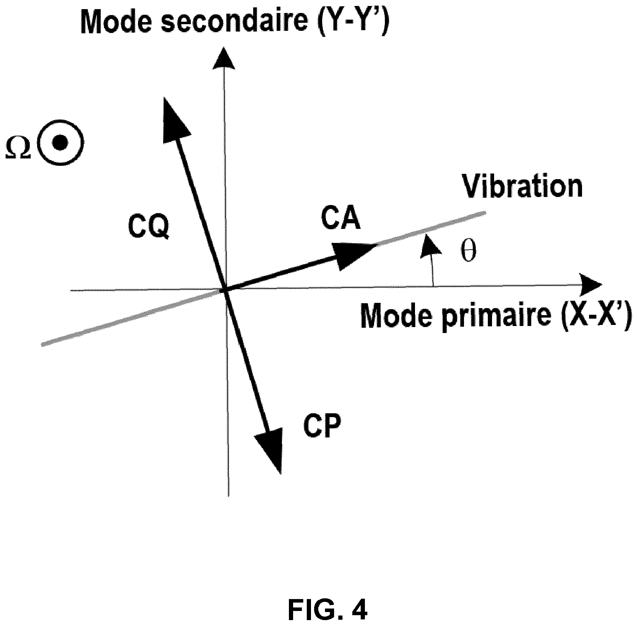

En référence à la figure 4 qui représente dans le plan modal l'orientation des forces générées par les éléments 31, l'idée s'appuie sur la constatation que quelle que soit l'orientation de la vibration définie par l'angle électrique azimutal $\theta$, CA est toujours en phase temporellement avec CP et géométriquement orthogonale à CP, et CQ est toujours en quadrature de phase temporelle avec CA, et géométriquement colinéaire à CP.

On peut alors générer chaque force comme l'action de 2 vecteurs appliqués dans les directions orthogonales des modes primaire et secondaire, avec par exemple pour CA un vecteur aligné sur la direction X-X' avec une amplitude A×C1, et un autre vecteur aligné sur la direction Y-Y' avec une amplitude A×C2, où C1 et C2 sont deux coefficients fonction de $\theta$, dits premier coefficient et deuxième coefficient, préférentiellement tels que $C1^2+C2^2=1$, ce qui conduit alors très astucieusement à asservir en amplitude la vibration dans la direction $\theta$ telle que $C1=\cos(\theta)$ et $C2=\sin(\theta)$.

Par conséquent, alors que la première boucle avait la consigne A et la troisième boucle virtuellement la consigne 0, ces consignes deviennent respectivement A×C1 et A×C2. Ceci conduit le régulateur R1 à minimiser A×C1-D1p, et le régulateur R3 à minimiser A×C2-D2p. On comprend que :

- la première boucle présente comme la troisième boucle un rôle de compensation des forces de Coriolis dues à la rotation du résonateur 3 excitant le mode de résonance perpendiculaire à la vibration (le mode secondaire si $\theta$ =0°, le mode primaire si $\theta$ =90° et une combinaison des deux sinon) ;
- la troisième boucle présente comme la première boucle un rôle de contrôle en amplitude de la vibration, pour la première boucle selon l'axe du mode secondaire de résonance (projection sur l'axe des abscisses de la base modale par la multiplication par $\cos(\theta)$), et pour la troisième boucle l'axe du mode secondaire de résonance (projection sur l'axe des abscisses de la base modale par la multiplication par $\sin(\theta)$), voir figure 3.

Ces points de consigne ne nécessitent aucun traitement spécifique et on peut simplement pré-calculer des valeurs de C1 et C2 et les stocker dans une table 12 (Look-up Table, ou LUT de la figure 5) qui reçoit en entrée une consigne externe à DGB notée CE définissant un angle $\theta$ souhaité. Cette consigne externe peut avoir un caractère permanent de programmation de la LUT 12 (i. e. $\theta$ est prédéfini) qui renvoie alors des coefficients C1 et C2 fixes dits « usine ». Cette consigne externe peut aussi piloter la LUT pour obtenir des coefficients C1 et C2 variables, ce qui provoquerait une précession de la vibration. Cette consigne externe peut aussi elle-même fournir directement les valeurs de C1 et C2, la LUT ne faisant alors que transférer ces valeurs vers les régulateurs. Préférentiellement, cette consigne externe CE impose à la LUT de renvoyer des valeurs stockées de coefficients C1 et C2 calculés comme des fonctions sinus et cosinus d'un angle $\theta$ qui devient alors l'angle azimutal pris par la vibration.

Comme le régulateur R3 joue à présent un rôle identique à celui du régulateur R1, dans ce nouveau mode FTR toute attitude, le régulateur R1 et le régulateur R3 peuvent être conçus avec les mêmes paramètres (c'est-à-dire le gain, la largeur de bande, les fréquences), et pour la figure 5, le régulateur R3 peut alors être identique au régulateur R1. Ainsi, pour obtenir un angle azimutal $\theta=90°$, la première boucle prend le premier coefficient C1=0 (la première boucle a alors un pur rôle de compensation des forces de Coriolis) et la troisième boucle prend le deuxième coefficient C2=1, i.e. la consigne A×C2=A (la troisième boucle a alors un pur rôle de contrôle en amplitude). La vibration, vis-à-vis des forces générées par les boucles 1 et 3 prend alors une orientation de 45° dans le repère physique, c'est-à-dire orientée selon les axes Y et Y' de la figure 2. Toute valeur intermédiaire est possible, comme par exemple $C1 = \dfrac{\sqrt{3}}{2}$ et C2=1/2 qui conduirait à un angle électrique de 30°.

Concernant le régulateur R2 de la PLL, lorsque par exemple C1=0 et que l'angle azimutal prend une valeur de 90°, compte tenu que le mode secondaire initial ($\theta$=0°), prend alors virtuellement le rôle du mode primaire, il devient nécessaire d'établir le signal d'entrée du régulateur R2 à partir du signal en quadrature D2q de la deuxième voie de détection. A cet effet, un commutateur (switch) est utilisé en amont de R2 sélectionnant soit le signal D1q, soit le signal D2q, pour établir le signal d'entrée D12q du régulateur R2. La commande de ce commutateur est également un troisième coefficient C3 stocké dans la LUT qui comme C1 et C2, résulte soit d'une programmation fixe usine, soit est défini par un signal d'entrée de DGB noté CE. Préférentiellement, C3 permet d'obtenir une amplitude maximale pour le signal D12q. Préférentiellement, C3 bascule le commutateur lorsque l'angle azimutal $\theta$ prend la valeur 45°, avec pour les valeurs d'angle azimutal comprises entre 0° et 45°, l'égalité D12q=D1q, et pour les valeurs d'angle électrique azimutal comprises entre 45° et 90°, l'égalité D12q=D2q.

Concernant le régulateur R4 du contrôle de quadrature, de façon similaire au régulateur de la PLL, il est aussi nécessaire d'établir son signal d'entrée en sélectionnant soit le signal D1q, soit le signal D2q. A nouveau un commutateur est utilisé et la commande de ce commutateur est également un quatrième coefficient C4 stocké dans la LUT qui comme C1 et C2, résulte soit d'une programmation fixe usine, soit est définie par un signal d'entrée de DGB variable notée CE. Ce quatrième coefficient C4 peut être un coefficient différent de C3. Préférentiellement ce coefficient permet d'obtenir une amplitude maximale pour le signal D21q d'entrée du régulateur R4. Préférentiellement, C4 bascule le commutateur lorsque l'angle azimutal $\theta$ prend la valeur 45°, avec pour les valeurs d'angle azimutal comprises entre 0° et 45°, l'égalité D21q=D2q, et pour les valeurs d'angle électrique azimutal comprises entre 45° et 90°, l'égalité D21q=D1q.

La sortie OR4 du régulateur de quadrature R4 reste classiquement sommée à la sortie OR3 du régulateur R3 lorsque l'angle électrique azimutal $\theta$ est égal à 0°. En revanche, lorsque l'angle électrique azimutal $\theta$ est égal à 90° et que le mode secondaire devient virtuellement le mode primaire, la sortie OR4 du régulateur de quadrature R4 doit alors être sommée à la sortie OR1 du régulateur R1. Ceci est à nouveau réalisé à l'aide d'un commutateur. La commande de ce commutateur est avantageusement identique à la commande du commutateur d'entrée de R4 (quatrième coefficient C4) et peut donc être un coefficient différent de C3. Alternativement, ce coefficient est identique à C3 avec un basculement du commutateur pour un angle électrique azimutal de 45° de sortes que lorsque l'angle électrique azimutal prend des valeurs entre 0° et 45°, ce commutateur envoie OR4 vers un sommateur dont l'autre signal d'entrée est la sortie OR3, et lorsque l'angle électrique azimutal prend des valeurs entre 45° et 90°, ce commutateur envoie OR4 vers un sommateur dont l'autre signal d'entrée est la sortie OR1, avec cette fois un changement de signe pour tenir compte de l'orientation réelle de la force de quadrature dans le repère modal.

Pour terminer, en présence d'une rotation selon l'axe de mesure, ce mode FTR toute attitude conduit à une modulation des sorties des régulateurs R1 et R3 par la vitesse angulaire $\Omega$. Autrement dit, la sortie des régulateurs R1 et R3 contient l'information $\Omega$ puisqu'une force de Coriolis apparait alors dans la direction opposée au vecteur Cp sur la figure 4 avec une projection non nulle sur les axes des modes primaire et secondaire, c'est-à-dire avec une composante proportionnelle à -C2 dans la direction du mode primaire, et une composante proportionnelle à +C1 dans la direction du mode secondaire. Pour extraire la vitesse angulaire $\Omega$ des signaux issus de ces régulateurs, il convient alors de multiplier la sortie OR1 du régulateur R1 par le coefficient -C2, de multiplier la sortie OR3 du régulateur R3 par le coefficient C1, et de calculer la différence OR3×C1-OR1×C2, les consignes C1 et C2 étant préférentiellement choisies telles que $C1^2+C2^2=1$.

Pour résumer :

-    En entrée :

◦ Dans la première boucle, le régulateur R1 prend toujours en entrée D1p, i.e. la composante en phase du mode primaire, mais cherche à minimiser A×C1-D1p, avec C1 une consigne définie par une LUT 12 commandée ou programmée par un signal externe à DGB noté CE, plutôt que juste A-D1p, A×C1 correspondant comme expliqué à la projection de A sur l'axe du mode primaire de vibration lorsque C1=cos($\theta$).

◦ Dans la deuxième boucle, le régulateur R2 cherche à minimiser D12q avec D12q prenant la valeur de sortie d'un commutateur piloté par une consigne C2 définie par une LUT 12 commandée ou programmée par un signal externe à DGB noté CE. Ce commutateur sélectionne soit D1q, soit D2q, selon la valeur de l'angle électrique azimutal, i.e. la composante en quadrature de phase soit du mode primaire, soit du mode secondaire, plutôt que juste D1q,

◦ Dans la troisième boucle, le régulateur R3 prend toujours en entrée D2p, i.e. la composante en phase du mode secondaire, mais cherche à minimiser A×C2-D2p, avec C2 une consigne définie par une LUT 12 commandée ou programmée par un signal externe à DGB noté CE et préférentiellement telle que $C1^2+C2^2=1$, plutôt que juste D2p, A×C2 correspondant comme expliqué à la projection de A sur l'axe du mode secondaire de vibration lorsque C2=sin($\theta$),

◦ Dans la quatrième boucle, le régulateur R4 cherche à minimiser D21q avec D21q prenant la valeur de sortie d'un commutateur piloté par une consigne C4 définie par une LUT 12 commandée ou programmée par un signal externe à DGB noté CE. Ce commutateur sélectionne soit D2q, soit D1q, selon la valeur de l'angle électrique azimutal, i.e. la composante en quadrature de phase soit du mode secondaire, soit du mode primaire, plutôt que juste D2q.

-    En sortie :

◦ Les sorties OR1 et OR3 des régulateurs R1 et R3 contiennent toutes les deux une partie de l'information de vitesse angulaire. Pour reconstituer cette information il convient de calculer la différence OR3×C1- OR1×C2,

◦ On a toujours en sortie du régulateur R2 les signaux harmoniques de référence SIN et COS, respectivement la phase et la quadrature de phase du mode primaire lorsque l'angle azimutal vaut 0°, ou du mode secondaire lorsque l'angle azimutal vaut 90°, ou d'une combinaison du mode primaire et du mode secondaire représentant l'état de la vibration lorsque l'angle azimutal est quelconque entre 0° et 90°,

◦ Alors qu'auparavant on avait toujours la sortie OR4 du régulateur R4 sommée à la sortie du régulateur R3, cette sortie OR4, grâce à un commutateur piloté par le quatrième coefficient C4 défini par une LUT commandée ou programmée par un signal externe à DGB noté CE, est soit sommée à OR3, soit à OR1, selon la valeur prise par l'angle azimutal.

*Principe du mode FTR toute attitude continu*

L'inconvénient principal du mode FTR toute attitude décrit ci-dessus est l'interruption du fonctionnement continu des régulateurs R2 et R4 provoquée lors du basculement des commutateurs. Même si cette interruption peut être réalisée en un temps très court, inférieur à une période du signal harmonique correspondant à la vibration entretenue du résonateur, une perturbation du système de contrôle de la vibration peut être créée. Un autre aspect est aussi celui de la variation de l'amplitude des signaux d'entrée des régulateurs R2 et R4 alors que la vibration prend différentes positions angulaires dans le plan modal. Ceci conduit à une variation de la performance.

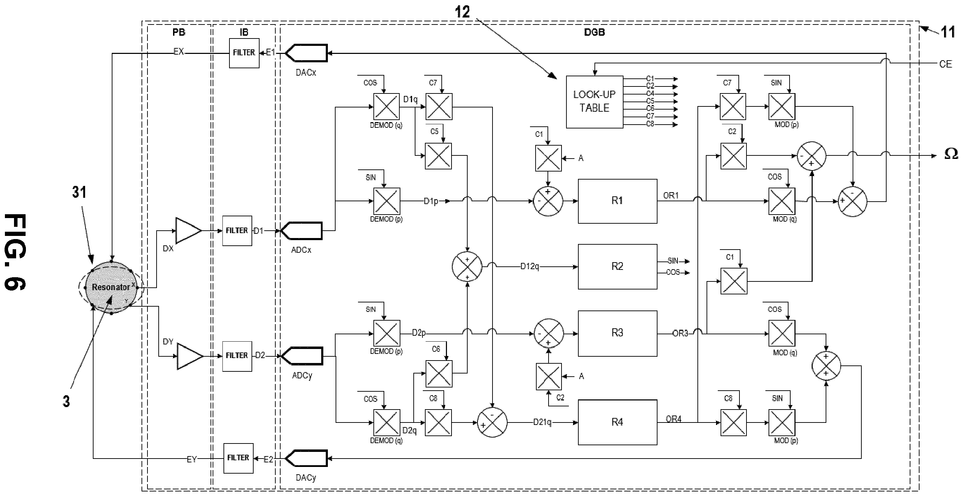

Pour remédier à cela, une variante des principes exposés ci-dessus est décrite par la figure 6 où les trois commutateurs agissant sur les régulateurs R2 et R4 sont remplacés par des éléments de calculs utilisant d'autres cinquième, sixième, septième et huitième coefficients C5, C6, C7, C8, qui tout comme C1 et C2 dont les principes présentés ci-dessus restent inchangés, sont préférentiellement tabulés, i.e. stockés dans une LUT 12 qui reçoit en entrée une consigne externe à DGB notée CE. Cette consigne externe peut avoir un caractère permanent de programmation de la LUT qui renvoie alors des coefficients C1, C2, C5, C6, C7 et C8 fixes dites « usine ». Cette consigne externe CE peut conduire la LUT à définir des coefficients variables stockées dans la LUT, ou directement transférés depuis CE vers les régulateurs, via la LUT par exemple. Préférentiellement, cette consigne externe CE impose à la LUT 12 de renvoyer des valeurs stockées de coefficients C1, C2, C5, C6, C7 et C8 calculées comme des fonctions sinus et cosinus d'un angle $\theta$ qui devient alors l'angle azimutal pris par la vibration. En conséquence, le mode FTR toute attitude devient continu.

Pour cette nouvelle architecture de mise en oeuvre FTR toute attitude, R3 joue toujours un rôle similaire à celui du régulateur R1, et le régulateur R1 et le régulateur R3 peuvent être conçus, préférentiellement, avec les mêmes paramètres (c'est-à-dire le gain, la largeur de bande, les fréquences). Le régulateur R1 reçoit la consigne $A \times C1$ et s'emploie toujours à minimiser la grandeur $A \times C1 - D1p$. Le régulateur R3 reçoit la consigne $A \times C2$ et minimise la grandeur $A \times C2 - D2p$, ces 2 régulateurs R1 et R3 contrôlant à la fois l'amplitude de la vibration et annulant l'effet des forces de Coriolis. Lorsque la condition $C1^2 + C2^2 = 1$ est respectée, les coefficients C1 et C2 peuvent être représentées comme des fonctions harmoniques de l'angle $\theta$ qui définit la position angulaire de la vibration dans le plan modal.

Concernant le régulateur R2 de la PLL, deux nouveaux cinquième et sixième coefficients C5 et C6 sont utilisés pour agir sur le signal D12q que ce régulateur cherche à minimiser. Les coefficients C5 et C6 sont stockés dans la LUT 12 et comme pour C1 et C2, ils résultent soit d'une programmation fixe « usine », soit sont définis par un signal d'entrée de DGB qui leur attribue des valeurs variables. Le signal externe pilotant la LUT est noté CE. Le régulateur minimise alors la grandeur $D12q = D1q \times C5 + D2q \times C6$. Préférentiellement,

$C5^2 + C6^2 = 1$. Préférentiellement, $C5 = C1$ et $C6 = C2$.

Les sorties du régulateur 2 sont inchangées et correspondent aux signaux harmoniques de référence SIN et COS, respectivement la phase et la quadrature de phase du mode primaire lorsque l'angle azimutal vaut 0°, ou du mode secondaire lorsque l'angle azimutal vaut 90°, ou d'une combinaison du mode primaire et du mode secondaire représentant l'état de la vibration lorsque l'angle azimutal est quelconque entre 0° et 90°.

Concernant le régulateur R4 du contrôle de quadrature, de façon similaire au régulateur de la PLL, deux nouveaux septième et huitième coefficients C7 et C8 sont utilisés pour agir sur le signal D21q que ce régulateur cherche à minimiser. Les coefficients C7 et C8 sont stockés dans la LUT et comme pour C1, C2, C5 et C6, ils résultent soit d'une programmation fixe « usine », soit sont définis par un signal d'entrée CE de DGB qui leur attribue des valeurs variables. Le régulateur minimise alors la grandeur $D21q = D1q \times C7 + D2q \times C8$. Préférentiellement, $C7^2 + C8^2 = 1$. Préférentiellement, $C7 = C2$ et $C8 = C1$.

La sortie OR4 du régulateur R4 est indirectement ajoutée aux sorties des régulateurs R1 et R3 avec une pondération $-OR4 \times C7$ pour la grandeur s'ajoutant à la sortie du régulateur R1, et une pondération $OR4 \times C8$ pour la grandeur s'ajoutant à la sortie du régulateur R3. Ce principe permet de restituer les composantes vectorielles de la force de quadrature tenant compte de la position angulaire de la vibration représentée par l'angle azimutal $\theta$.

L'estimation de la vitesse angulaire dans ce mode continu est identique au cas toute attitude utilisant des commutateurs décrit précédemment. Autrement dit, la sortie des régulateurs R1 et R3 contient l'information $\Omega$ avec une projection non nulle sur les axes des modes primaire et secondaire, c'est-à-dire avec une composante proportionnelle à $-C2$ dans la direction du mode primaire, et une composante proportionnelle à $+C1$ dans la direction du mode secondaire. Pour extraire la vitesse angulaire $\Omega$ des signaux issus de ces régulateurs, il convient alors de multiplier la sortie OR1 du régulateur R1 par une consigne $-C2$, de multiplier la sortie OR3 du régulateur R3 par une consigne C1, et de calculer la différence $OR3 \times C1 - OR1 \times C2$.

*Mode WA*

Un des inconvénients principal connu du mode FTR, qu'il soit standard, ou toute attitude, ou toute attitude continu comme décrits ci-dessus, est que le domaine de mesure en rotation est limité. En effet, plus l'amplitude de la rotation inertielle appliquée colinéairement à l'axe de mesure du senseur augmente, plus l'électronique de contrôle des forces de Coriolis, éléments de couplage électromécaniques inclus, doit fournir des signaux de valeurs élevées s'opposant à l'effet des forces de Coriolis, ce qui en pratique est limité par la tension d'alimentation du senseur.

Pour remédier à cette limitation, le mode FTR toute attitude, ou le mode FTR toute attitude continu décrits précédemment, peuvent être transformés en un mode gyroscope, appelé mode WA (Whole Angle) pour lequel, théoriquement, il n'y a pas de limitation pour le domaine de mesure en rotation.

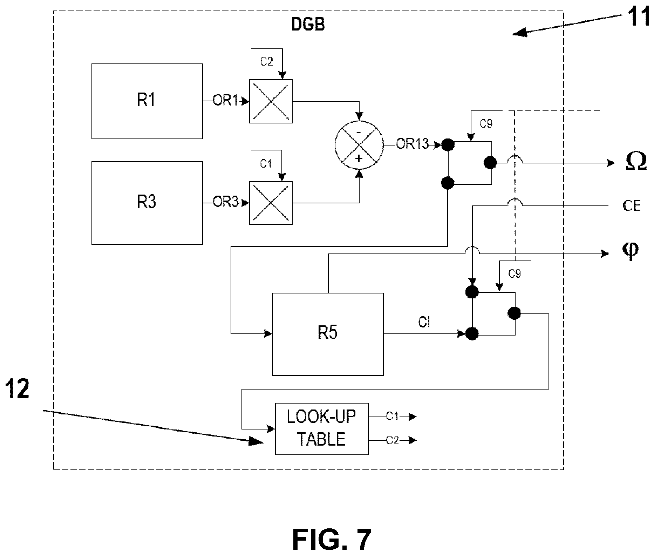

En référence à la figure 7, une cinquième boucle de contrôle dudit angle azimutal $\theta$ est mise en oeuvre, utilisant un cinquième régulateur R5 cherchant à minimiser la différence OR13 du produit par C2 de la sortie OR1 du premier régulateur R1 et du produit par C1 de la sortie OR3 du troisième régulateur R3, où OR13 correspond à l'amplitude de la force CP devant être fournie pour s'opposer à l'action des forces de Coriolis sur la vibration entretenue, et donc proportionnelle à la vitesse angulaire $\Omega$ selon l'axe de mesure du capteur gyroscopique vibrant 1.

Plus précisément, l'intégrale de la valeur de OR13 est proportionnelle à la position angulaire du capteur gyroscopique vibrant 1, et donc le régulateur R5 joue le rôle d'un intégrateur de la vitesse angulaire du capteur gyroscopique vibrant 1 et doit fournir une commande CI qui conduit la LUT 12 à envoyer des coefficients C1 et C2 telles que la force CP soit nulle. Une sortie du régulateur R5 est l'angle de rotation physique $\varphi$ du capteur gyroscopique vibrant 1, proportionnel à l'angle azimutal $\theta$ (en pratique la moitié).

Dans ce cas, la position angulaire de la vibration n'est plus asservie par rapport au résonateur qui se met donc à tourner autour du plan de vibration. Ceci correspond au mode opératoire gyroscope.

Les coefficients C1 et C2, et C5, C6, C7, C8 sont préférentiellement comme expliqué des coefficients harmoniques, avec C1=C5=C8=cos($\theta$), C2=C6=C7=sin($\theta$). L'angle $\theta$ est l'angle azimutal définissant la position angulaire de la vibration entretenue dans le plan modal.

A noter que la branche de feedback de la cinquième boucle n'est pas représentée sur la figure 7. Cette branche est issue des coefficients C1 et C2, ainsi que C5, C6, C7 et C8, distribués vers les différents régulateurs présentés sur la figure 5 ou la figure 6.

Ce nouveau mode WA présente de nombreux avantages par rapport à l'état de l'art fondé sur des principes présentés dans le guide IEEE 1431-2004, intitulé « IEEE Standard Spécification Format Guide and Test Procédure for Coriolis Vibratory Gyros » :

- Il dérive directement du mode FTR toute attitude ou FTR toute attitude continu,
- L'estimation de l'angle physique de la rotation du capteur gyroscopique vibrant 1 résulte directement de la sortie d'un régulateur et ne nécessite donc pas de réaliser des calculs trigonométriques complexes, comme par exemple l'arc tangente de l'angle azimutal $\theta$,
- Il est possible de combiner le mode FTR toute attitude et le mode WA en implémentant un commutateur piloté par un neuvième coefficient C9 représentée en figure 7 telle que, au-delà d'une valeur spécifiée de vitesse angulaire $\Omega$, le mode WA est activé et le mode FTR est désactivé. Préférentiellement, le coefficient C9 résulte de la sortie d'un comparateur (non représenté en figure 7) ayant en entrée OR13 et une valeur fixe de consigne programmée en usine. Préférentiellement, le coefficient C9 peut résulter d'une commande externe au dispositif 11.

*Procédé*

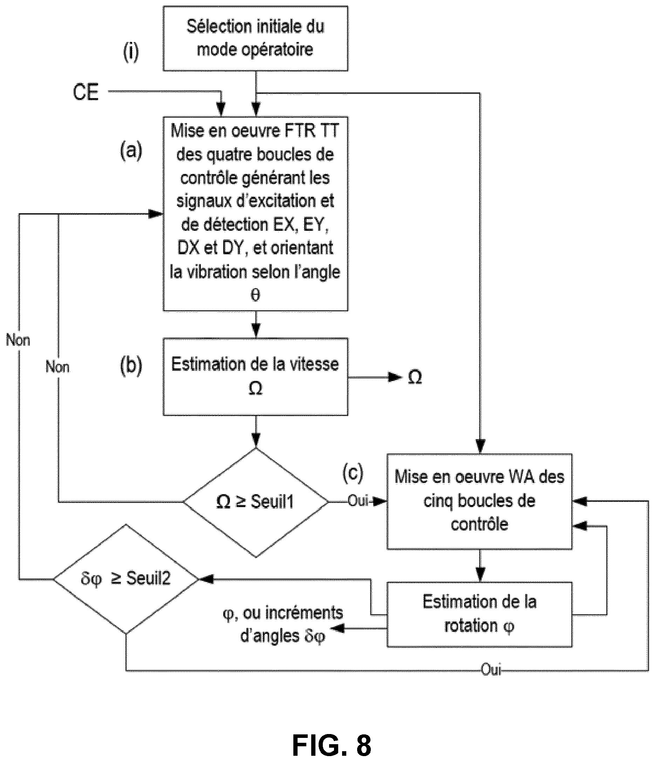

Selon un premier aspect, en référence à la figure 8, la présente invention propose un procédé de mesure de la vitesse angulaire d'une rotation, ou d'une position angulaire, selon un axe sensible du capteur gyroscopique vibrant 1, qui peut commencer par une étape optionnelle (i) de sélection initiale d'un mode opératoire du capteur gyroscopique vibrant 1, soit gyromètre FTR toute attitude (FTR TT), soit FTR TT continu, soit gyroscope Whole Angle, WA, soit une combinaison de ces modes opératoires, FTR TT et WA.

Lorsque le mode opératoire FTR TT (continu ou non continu) est sélectionné, le système passe à l'étape (a) qui comprend des moyens de traitement du signal et de données 11, depuis l'instrumentation de couplage électromécanique 31 du résonateur 3, du premier signal de détection DX d'une vibration dudit résonateur 3 selon un mode primaire de résonance, et du deuxième signal de détection DY d'une vibration dudit résonateur 3 selon le mode secondaire de résonance, et génère à l'aide de quatre boucles de contrôle un premier signal d'excitation EX du mode primaire de résonance et un deuxième signal d'excitation EY du mode secondaire de résonance, la vibration physique prenant un orientation non nécessairement colinéaire aux modes primaire et secondaire.

De manière originale, lors de cette étape (a), le capteur gyroscopique vibrant 1 s'appuie préférentiellement sur des moyens de stockage de données 12 comprenant une table de valeurs précalculées C1 à C9 ou variables définies par une commande externe CE pour utilisation par les moyens de traitement de données 11 permettant d'orienter l'axe de vibration du résonateur 3 d'un angle azimutal $\theta$ dans le plan modal par rapport à une direction de référence définie par le mode primaire (axe des abscisses du plan modal). Les moyens de traitement de données mettent en oeuvre au moins quatre boucles de contrôle dont :

    ◦ une première boucle de contrôle de l'amplitude de la vibration du résonateur 3 projetée selon l'axe du mode primaire de résonance et compensant également l'effet des forces de Coriolis, utilisant un premier régulateur R1, qui cherche à minimiser la différence entre la composante D1p en phase du premier signal de détection et le produit A$\times$C1 d'une consigne d'amplitude A de la vibration du résonateur 3 et d'un premier coefficient C1. Le premier signal d'excitation EX est généré en fonction des sorties du premier et du quatrième régulateur R1, R4.

◦ une deuxième boucle à phase asservie générant des signaux harmoniques de référence en phase et en quadrature de phase avec la vibration entretenue, permettant de séparer lesdites composantes en phase et en quadrature de phase des signaux de détection, utilisant un deuxième régulateur R2 (plus précisément, l'étape (b) comprend la réalisation desdites composante en phase et composante en quadrature de phase à partir du premier et du deuxième signal de détection par démodulation du premier et du deuxième signal de détection en fonction des signaux harmoniques de référence en phase et en quadrature de phase avec la vibration entretenue). En particulier, le deuxième régulateur R2 cherche à minimiser la somme D12q entre le produit de la composante D1q en quadrature de phase du premier signal de détection par un cinquième coefficient C5, et le produit de la composante D2q en quadrature de phase du deuxième signal de détection par un sixième coefficient C6,

◦ une troisième boucle de contrôle de l'amplitude de la vibration du résonateur 3 projetée sur l'axe du mode secondaire et compensant l'effet des forces de Coriolis, utilisant un troisième régulateur R3, qui cherche à minimiser la différence entre la composante D2p en phase du deuxième signal de détection et le produit A×C2 d'une consigne d'amplitude A de la vibration du résonateur 3 et d'un deuxième coefficient C2 issu de la table 12. La sortie des régulateurs R1 et R3 contient l'information Ω. Pour extraire la vitesse angulaire Ω des signaux issus de ces régulateurs, il convient alors de multiplier la sortie OR1 du régulateur R1 par -C2, de multiplier la sortie OR3 du régulateur R3 par le premier coefficient C1, et de calculer la différence OR3×C1-OR1×C2,

◦ une quatrième boucle de contrôle de la quadrature de la vibration du résonateur 3 selon soit le mode secondaire de résonance, soit le mode primaire, soit un mode combiné de résonance, utilisant un quatrième régulateur R4, qui cherche à minimiser la différence D21q entre le produit de la composante D2q en quadrature du deuxième signal de détection par un huitième coefficient C8, et le produit de la composante D1q en quadrature du premier signal de détection par un septième coefficient C7. De manière classique le deuxième signal d'excitation EY est généré en fonction des sorties du troisième et du quatrième régulateur R3, R4.

De manière préférée le mode opératoire peut basculer automatiquement de FTR TT à WA et vice versa. En particulier, le mode opératoire FTR TT bascule sur le mode opératoire WA si la vitesse angulaire estimée est supérieure à un premier seuil (noté Seuil 1), et/ou le mode opératoire WA bascule sur le mode opératoire FTR TT si la vitesse angulaire est inférieure à un deuxième seuil (noté seuil 2), préférentiellement proche ou identique au premier seuil.

Plus précisément, dans ce mode de réalisation préféré, lorsque la vitesse angulaire mesurée atteint et dépasse le seuil de mesure prédéfini, Seuil 1, le signal de sortie de l'électronique de mise en oeuvre 11 du capteur gyroscopique vibrant 1, et comprenant différentes fonctions d'adaptation et de traitement des signaux, soit sature si le mode FTR TT a été sélectionné lors de l'étape (i), soit bascule automatiquement en mode WA pour lequel une cinquième boucle de contrôle est activée à l'aide d'un commutateur. Dans ce cas, la sortie naturelle du système passe d'une mesure de vitesse angulaire à une mesure d'un angle de rotation (position angulaire), ou d'un incrément d'angle. La connaissance des incréments d'angle cadencés par une horloge interne au dispositif 11, est une grandeur proportionnelle à la vitesse angulaire qui lorsque qu'elle redescend en dessous du deuxième seuil de mesure prédéfini, Seuil 2, provoque un rebasculement du mode opératoire WA vers le mode FTR TT (continu ou non continu). Le Seuil 2 peut être déclenché sur pour une vitesse angulaire correspondant au premier seuil, le Seuil 1.

Si lors de l'étape de sélection initiale le mode opératoire choisi est le mode WA, les 5 régulateurs sont activés dès le départ, avec pour le régulateur R5 le contrôle de $\theta$ et donc la sélection des premier et deuxième coefficients C1 et C2 utilisés par les régulateurs Amplitude/Coriolis R1 et R3, telles que ces régulateurs ne génèrent pas de forces s'opposant aux forces de Coriolis. La vibration est alors libre, c'est-à-dire qu'elle n'est plus entraînée par le résonateur mis en rotation, et la sortie du régulateur 5 est une information de rotation angulaire $\varphi$ selon l'axe de mesure du capteur gyroscopique vibrant 1.

Dans une étape (c), les moyens de traitement de données 11 estiment ladite vitesse angulaire et/ou de ladite position angulaire, en fonction des sorties des régulateurs. Cette étape (c) est en pratique mise en oeuvre simultanément avec les autres étapes.

Comme représenté par la figure 7 :

- la vitesse angulaire Ω peut être estimée à partir des sorties OR1 et OR3 des premier et troisième régulateurs R1, R3, en particulier il convient alors de multiplier la sortie OR1 du régulateur R1 par -C2, de multiplier la sortie OR3 du régulateur R3 par le premier coefficient C1, et de calculer la différence OR3×C1-OR1×C2 ; et/ou

- si le cinquième régulateur est utilisé, la position angulaire $\varphi$ peut être estimée à partir de la sortie OR5 du cinquième régulateur R5 ; en pratique il convient de prendre la moitié de la sortie OR5 du cinquième régulateur R5 puisque celle-ci correspond à l'angle azimutal $\theta$.

*Capteur gyroscopique vibrant axisymétrique*

Selon un deuxième aspect, l'invention propose le capteur gyroscopique vibrant 1 pour la mise en oeuvre du procédé selon le premier aspect (i.e. pour la mesure d'une vitesse angulaire d'une rotation, ou d'une position angulaire, selon un axe sensible).

Il comprend classiquement :

- un résonateur 3 présentant une instrumentation de couplage électromécanique 31 pour la mise en vibration dudit résonateur selon un premier signal de détection et un premier signal d'excitation d'un mode primaire de résonance, et un deuxième signal de détection et un deuxième signal d'excitation d'un mode secondaire de résonance ;
- des moyens de traitement de données 11 permettant de définir l'orientation de la vibration dans l'espace des modes à partir éventuellement d'une consigne CE externe, et d'établir une information proportionnelle soit à la vitesse de rotation projetée sur l'axe de mesure du capteur gyroscopique vibrant 1, soit à la rotation angulaire du capteur ;
- Éventuellement des moyens de stockage de données 12 (pour le stockage en particulier de la table de valeurs des coefficients C1 et C2, i.e. $\cos(\theta)$ et $\sin(\theta)$, ainsi qu'éventuellement C3, C4, C5, C6, C7, C8 et C9).

Comme expliqué, on suppose que l'axe principal de la vibration selon le mode primaire de résonance peut être écarté d'un angle azimutal $\theta$ par rapport à une direction de référence dans l'espace des modes défini par les modes primaire et secondaire du résonateur 3, et ainsi les moyens 11 sont configurés pour :

○ recevoir, depuis l'instrumentation de couplage électromécanique 31, un premier signal de détection d'une vibration dudit résonateur 3 selon le mode primaire de résonance, et un deuxième signal de détection d'une vibration dudit résonateur 3 selon le mode secondaire de résonance ; chacun du premier et du deuxième signal de détection comprenant une composante en phase et une composante en quadrature de phase ;
○ mettre en oeuvre au moins quatre boucles de contrôle dont :

■ une première boucle de contrôle de l'amplitude de la vibration du résonateur 3 projetée sur l'axe du mode primaire de résonance, et compensant également les forces de Coriolis dues à ladite rotation du résonateur excitant le mode de résonance perpendiculaire à la vibration, utilisant un premier régulateur R1, le premier régulateur R1 cherchant à minimiser la différence entre la composante en phase du premier signal de détection et le produit par $\cos(\theta)$ d'une amplitude consigne A de la vibration du résonateur 3 ;

■ une deuxième boucle à phase asservie générant des signaux harmoniques de référence de phase et la quadrature de phase du mode primaire permettant de séparer lesdites composantes en phase et en quadrature de phase des signaux de détection, utilisant un deuxième régulateur R2 ;

■ une troisième boucle de contrôle de l'amplitude de la vibration du résonateur projetée sur l'axe du mode secondaire de résonance, et compensant également les forces de Coriolis dues à ladite rotation du résonateur 3 excitant le mode secondaire de résonance, utilisant un troisième régulateur R3, le troisième régulateur R3 cherchant à minimiser la différence entre la composante en phase du deuxième signal de détection et le produit par $\sin(\theta)$ de ladite amplitude de consigne A de la vibration du résonateur 3 ;

■ une quatrième boucle de contrôle de la quadrature d'un mode de résonance perpendiculaire à la vibration du résonateur, c'est-à-dire, soit le mode primaire, soit le mode secondaire, soit un mode combiné de résonance, et utilisant un quatrième régulateur R4 ;

■ une éventuelle cinquième boucle jouant le rôle d'un intégrateur de la vitesse angulaire du capteur gyroscopique vibrant 1 et fournissant une commande pilotant les consignes des régulateurs R1, R3 telles qu'aucune force ne s'oppose aux forces de Coriolis. Une sortie du régulateur R5 est l'angle de rotation physique $\varphi$ du capteur gyroscopique vibrant 1 ;

○ estimer ladite vitesse angulaire, et/ou ladite position angulaire, en fonction d'au moins les sorties du premier régulateur, du troisième régulateur, et le cas échéant du cinquième régulateur ;

*Produit programme d'ordinateur ou produit programme d'un circuit logique programmable*

Selon un troisième et un quatrième aspect, l'invention concerne un produit programme d'ordinateur ou programme d'un circuit logique programmable comprenant des instructions de code pour l'exécution (en particulier sur les moyens de traitement de données 11) d'un procédé selon le premier aspect de l'invention de mesure de la vitesse angulaire d'une rotation, ou une position angulaire, selon un axe sensible d'un capteur gyroscopique vibrant 1, ainsi que des moyens de stockage lisibles par un équipement informatique sur lequel on trouve ce produit programme d'ordinateur ou programme d'un circuit logique programmable.

## Revendications

1. Procédé de mesure d'une vitesse angulaire d'une rotation et/ou d'une position angulaire, selon un axe sensible d'un capteur gyroscopique axisymétrique vibrant (1), comprenant la mise en oeuvre, par des moyens de traitement de données (11) du capteur gyroscopique axisymétrique vibrant (1), d'étapes de :

   (a) Réception, depuis une instrumentation de couplage électromécanique (31) d'un résonateur (3) du capteur gyroscopique axisymétrique vibrant (1), d'un premier signal de détection d'une vibration dudit résonateur (3) selon un mode primaire de résonance, et d'un deuxième signal de détection d'une vibration dudit résonateur (3) selon un mode secondaire de résonance ; chacun du premier et du deuxième signal de détection comprenant une composante en phase et une composante en quadrature de phase ; ledit résonateur (3) étant mis en vibration via ladite instrumentation de couplage électromécanique (31) selon un premier signal d'excitation du mode primaire de résonance et un deuxième signal d'excitation du mode secondaire de résonance ;

   (b) Mise en oeuvre d'au moins quatre boucles de contrôle dont :

      ∘ une première boucle de contrôle de l'amplitude de la vibration du résonateur (3) selon l'axe du mode primaire de résonance, utilisant un premier régulateur (R1);
      ∘ une deuxième boucle à phase asservie générant des signaux harmoniques de référence en phase et en quadrature de phase du mode primaire et/ou du mode secondaire, permettant de séparer lesdites composantes en phase et en quadrature de phase des signaux de détection, utilisant un deuxième régulateur (R2) ;
      ∘ une troisième boucle de compensation des forces de Coriolis due à ladite rotation du résonateur (3) excitant un mode de résonance perpendiculaire à la vibration, utilisant un troisième régulateur (R3) ;
      ∘ une quatrième boucle de contrôle de la quadrature dudit mode de résonance perpendiculaire à la vibration du résonateur utilisant un quatrième régulateur (R4) ;

   (c) Estimation de ladite vitesse angulaire et/ou de ladite position angulaire, en fonction des sorties des régulateurs ;

   **caractérisé en ce que** la vibration est contrainte par les premier et deuxième signaux d'excitation de sorte à présenter un angle azimutal $\theta$ dans la base modale orthogonale des modes primaire et secondaire, le premier régulateur (R1) cherchant à minimiser la différence entre la composante en phase du premier signal de détection et le produit, par un premier coefficient C1 fonction de l'angle azimutal $\theta$, d'une amplitude de consigne de la vibration du résonateur (3), et le troisième régulateur (R3) cherchant à minimiser la différence entre la composante en phase du deuxième signal de détection et le produit, par un deuxième coefficient C2 fonction de l'angle azimutal $\theta$, de ladite amplitude de consigne de la vibration du résonateur (3), la première boucle étant également une boucle de compensation des forces de Coriolis et la troisième boucle étant également une boucle de contrôle en amplitude de la vibration du résonateur (3) selon l'axe du mode secondaire de résonance.

2. Procédé selon la revendication précédente **caractérisé en ce que** les premier et deuxième coefficients C1 et C2 vérifient $C1^2 + C2^2 = 1$, et de préférence vérifient C1=cos($\theta$), et C2=sin($\theta$).

3. Procédé selon l'une quelconque des revendications précédentes **caractérisé en ce que** le premier régulateur (R1) et le troisième régulateur (R3) sont identiques.

4. Procédé selon l'une quelconque des revendications précédentes **caractérisé en ce que** le deuxième régulateur (R2) cherche à minimiser la somme entre le produit, par un cinquième coefficient C5 fonction de l'angle azimutal $\theta$, de la composante en quadrature de phase du premier signal de détection, et le produit, par un sixième coefficient C6 fonction de l'angle azimutal $\theta$, de la composante en quadrature de phase du deuxième signal de détection.

5. Procédé selon la revendication précédente **caractérisé en ce que** les cinquième et sixième coefficients C5 et C6 vérifient $C5^2 + C6^2 = 1$, et de préférence vérifient C5=C1, et C6=C2.

6. Procédé selon l'une quelconque des revendications précédentes **caractérisé en ce que** ladite vitesse angulaire est estimée à l'étape (c) en calculant la différence OR13 du produit par le deuxième coefficient C2 de la sortie du premier régulateur (R1) et du produit par le premier coefficient C1 de la sortie du troisième régulateur (R3).

7. Procédé selon l'une quelconque des revendications précédentes **caractérisé en ce que** le capteur gyroscopique axisymétrique vibrant (1) comprend des moyens de stockage de données (12) stockant une table de valeurs précalculées des coefficients C1, C2, C3, C4, C5, C6, C7 et C8 utilisées par les moyens de traitement de données (11).

8. Procédé selon l'une quelconque des revendications précédentes, **caractérisé en ce que** l'étape (b) comprend la mise en oeuvre d'une cinquième boucle de contrôle dudit angle azimutal $\theta$ fournissant une commande pilotant les consignes des régulateurs (R1, R3) des première et troisième boucles, utilisant un cinquième régulateur (R5).

9. Procédé selon la revendication précédente, **caractérisé en ce que** ladite position angulaire est estimée à l'étape (c) en fonction de la sortie du cinquième régulateur (R5), ledit cinquième régulateur (R5) cherchant de préférence à minimiser la différence OR13 du produit par le deuxième coefficient C2 de la sortie OR1 du premier régulateur (R1) et du produit par le premier coefficient C1 de la sortie OR3 du troisième régulateur (R3).

10. Procédé selon la revendication précédente **caractérisé en ce qu'**il comprend une étape (i) préalable de sélection d'un mode opératoire parmi au moins un mode dit Force-To-Rebalance toute attitude, FTR TT, dans lequel ledit angle azimutal $\theta$ présente une valeur manuellement sélectionnée, alors que la cinquième boucle de contrôle n'est pas mise en oeuvre, et un mode dit Whole Angle, WA, dans lequel la cinquième boucle de contrôle est mise en oeuvre.

11. Procédé selon la revendication précédente **caractérisé en ce que** ladite sélection d'un mode opératoire est réalisée en fonction du résultat de la comparaison entre la vitesse angulaire estimée et au moins un seuil.

12. Procédé selon la revendication précédente **caractérisé en ce que** :

   - Le mode opératoire FTR TT bascule sur le mode opératoire WA si la vitesse angulaire estimée est supérieure à un premier seuil ;
   - Le mode opératoire WA bascule sur le mode opératoire FTR TT si la vitesse angulaire est inférieure à un deuxième seuil, préférentiellement proche ou identique au premier seuil.

13. Capteur gyroscopique axisymétrique vibrant (1) pour la mesure d'une vitesse angulaire ou d'une rotation selon un axe sensible, comprenant :

   - un résonateur (3) présentant une instrumentation de couplage électromécanique (31) pour la mise en vibration dudit résonateur selon un premier signal d'excitation issu d'un mode primaire de résonance et un deuxième signal d'excitation issu d'un mode secondaire de résonance ;
   - des moyens de traitement de données (11) configurés pour :

   ◦ recevoir, depuis l'instrumentation de couplage électromécanique (31), un premier signal de détection d'une vibration dudit résonateur (3) selon le mode primaire de résonance, et d'un deuxième signal de détection d'une vibration dudit résonateur (3) selon le mode secondaire de résonance ; chacun du premier et du deuxième signal de détection comprenant une composante en phase et une composante en quadrature de phase ;
   ◦ mettre en oeuvre au moins quatre boucles de contrôle dont :

   ▪ une première boucle de contrôle de l'amplitude de la vibration du résonateur (3) selon l'axe du mode primaire de résonance, utilisant un premier régulateur (R1);
   ▪ une deuxième boucle à phase asservie générant des signaux harmoniques de référence en phase et en quadrature de phase du mode primaire et/ou du mode secondaire, permettant de séparer lesdites composantes en phase et en quadrature de phase des signaux de détection, utilisant un deuxième régulateur (R2) ;
   ▪ une troisième boucle de compensation des forces de Coriolis due à ladite rotation du résonateur (3) excitant un mode de résonance perpendiculaire à la vibration, utilisant un troisième régulateur (R3) ;
   ▪ une quatrième boucle de contrôle de la quadrature dudit mode de résonance perpendiculaire à la vibration du résonateur utilisant un quatrième régulateur (R4) ;

   ◦ estimer ladite vitesse angulaire et/ou la position angulaire en fonction des sorties des régulateurs ;

**caractérisé en ce que** la vibration est contrainte par les premier et deuxième signaux d'excitation de sorte à présenter un angle azimutal $\theta$ dans la base modale orthogonale des modes primaire et secondaire, le premier régulateur (R1) cherchant à minimiser la différence entre la composante en phase du premier signal de détection et le produit, par un premier coefficient C1 fonction de l'angle azimutal $\theta$, d'une amplitude de consigne de la vibration du résonateur (3), et le troisième régulateur (R3) cherchant à minimiser la différence entre la composante en phase du deuxième signal de détection et le produit, par un deuxième coefficient C2 fonction de l'angle azimutal $\theta$, de ladite amplitude de consigne de la vibration du résonateur (3), la première boucle étant également une boucle de compensation des forces de Coriolis et la troisième boucle étant également une boucle de contrôle en amplitude de la vibration du résonateur (3) selon l'axe du mode secondaire de résonance.

14. Produit programme d'ordinateur comprenant des instructions de code pour l'exécution d'un procédé selon l'une des revendications 1 à 12 de mesure de la vitesse angulaire et/ou d'une position angulaire selon un axe sensible d'un capteur gyroscopique axisymétrique vibrant (1), lorsque ledit programme est exécuté sur un ordinateur.

15. Moyen de stockage lisible par un équipement informatique sur lequel est enregistré un produit programme d'ordinateur comprenant des instructions de code pour l'exécution d'un procédé selon l'une des revendications 1 à 12 de mesure de la vitesse angulaire et/ou d'une position angulaire selon un axe sensible d'un capteur gyroscopique axisymétrique vibrant (1).

**Patentansprüche**

1. Verfahren zum Messen einer Winkelgeschwindigkeit einer Rotation und/oder einer Winkelposition entlang einer sensitiven Achse eines vibrierenden achsensymmetrischen Gyroskopsensors (1), umfassend die Durchführung folgender Schritte durch Datenverarbeitungsmittel (11) des vibrierenden achsensymmetrischen Gyroskopsensors (1):

(a) Empfangen, von einer elektromechanischen Kopplungsinstrumentierung (31) eines Resonators (3) des vibrierenden achsensymmetrischen Gyroskopsensors (1), eines ersten Signals der Erfassung einer Vibration besagten Resonators (3) gemäß einer primären Mode der Resonanz und eines zweiten Signals der Erfassung einer Vibration besagten Resonators (3) gemäß einer sekundären Mode der Resonanz; wobei jedes der ersten und zweiten Erfassungssignale eine In-Phase-Komponente und eine Komponente in Quadratur der Phase umfasst; wobei besagter Resonator (3) über besagte elektromechanische Kopplungsinstrumentierung (31) gemäß einem ersten Anregungssignal der primären Mode der Resonanz und einem zweiten Anregungssignal der sekundären Mode der Resonanz in Vibration versetzt wird;
(b) Durchführung von mindestens vier Kontrollschleifen, darunter

○ eine erste Schleife der Steuerung der Amplitude der Vibration des Resonators (3) entlang der Achse der primären Mode der Resonanz, wobei ein erster Regler (R1) verwendet wird;
○ eine zweite Schleife der Phasenregelung, die In-Phase- und um 90° phasenverschobene harmonische Referenzsignale der primären Mode und/oder der sekundären Mode erzeugt, was erlaubt, besagte In-Phase- und um 90° phasenverschobenen Komponenten der Erfassungssignale zu trennen, wobei ein zweiter Regler (R2) verwendet wird;
○ eine dritte Schleife der Kompensation der Coriolis-Kräfte aufgrund besagter Rotation des Resonators (3), welche eine Mode der Resonanz senkrecht zu der Vibration anregt, wobei ein dritter Regler (R3) verwendet wird;
○ eine vierte Schleife zur Steuerung der Quadratur der besagten Mode der Resonanz senkrecht zu der Vibration des Resonators, wobei ein vierter Regler (R4) verwendet wird;

(c) Schätzen besagter Winkelgeschwindigkeit und/oder besagter Winkelposition in Abhängigkeit von den Ausgaben der Regler;

**dadurch gekennzeichnet, dass** die Vibration durch das erste und das zweite Anregungssignal so beschränkt wird, sodass sie einen Azimutwinkel $\Theta$ in der orthogonalen Modalbasis der primären und sekundären Moden aufweist, wobei der erste Regler (R1) versucht, die Differenz zwischen der In-Phase-Komponente des ersten Erfassungssignals und dem Produkt aus einer Soll-Amplitude der Vibration des Resonators (3) mit einem ersten Koeffizienten C1, der eine Funktion des Azimutwinkels $\Theta$ ist, zu minimieren, und der dritte Regler (R3) versucht, die Differenz zwischen der In-Phase-Komponente des zweiten Erfassungssignals und dem Produkt aus besagter Soll-Amplitude der Vibration des Resonators (3) mit einem zweiten Koeffizienten C2, der eine Funktion des Azimutwinkels $\Theta$ ist, zu minimieren, wobei die erste Schleife auch eine Schleife der Kompensation der Coriolis-Kräfte ist und die dritte Schleife auch eine Schleife zur Steuerung der Amplitude des Resonators (3) entlang der Achse des sekundären Mode der Resonanz ist.

2. Verfahren gemäß dem vorhergehenden Anspruch, **dadurch gekennzeichnet, dass** der erste C1 und der zweite Koeffizient C2 $C1^2+C2^2 =1$ erfüllen, und vorzugsweise $C1=\cos(\Theta)$ und $C2=\sin(\Theta)$ erfüllen.

3. Verfahren gemäß einem der vorhergehenden Ansprüche, **dadurch gekennzeichnet, dass** der erste Regler (R1) und der dritte Regler (R3) identisch sind.

4. Verfahren gemäß einem der vorhergehenden Ansprüche, **dadurch gekennzeichnet, dass** der zweite Regler (R2) versucht, die Summe zwischen dem Produkt aus der In-Phase-Komponente des ersten Erfassungssignals mit einem fünften Koeffizienten C5, der eine Funktion des Azimutwinkels $\Theta$ ist, und dem Produkt aus der In-Phase-Komponente des zweiten Erfassungssignals mit einem sechsten Koeffizienten C6, der eine Funktion des Azimutwinkels $\Theta$ ist, zu minimieren.

5. Verfahren gemäß dem vorhergehenden Anspruch, **dadurch gekennzeichnet, dass** der fünfte Koeffizient C5 und der sechste Koeffizient C6 und $C5^2+C6^2=1$, und vorzugsweise C5=C1 und C6=C2 erfüllen.

6. Verfahren gemäß einem der vorhergehenden Ansprüche, **dadurch gekennzeichnet, dass** besagte Winkelgeschwindigkeit in Schritt (c) geschätzt wird, indem die Differenz OR13 des Produkts aus dem Ausgang des ersten Reglers (R1) mit dem zweiten Koeffizienten C2 und des Produkts aus dem Ausgang des dritten Reglers (R3) mit dem ersten Koeffizienten C1 berechnet wird.

7. Verfahren gemäß einem der vorhergehenden Ansprüche, **dadurch gekennzeichnet, dass** der vibrierende achsensymmetrische Gyrosensor (1) Datenspeichermittel (12) umfasst, die eine Tabelle mit vorberechneten Werten der Koeffizienten C1, C2, C3, C4, C5, C6, C7 und C8 speichern, die von den Datenverarbeitungsmitteln (11) verwendet werden.

8. Verfahren gemäß einem der vorhergehenden Ansprüche, **dadurch gekennzeichnet, dass** der Schritt (b) die Durchführung einer fünften Schleife zur Steuerung besagten Azimutwinkels $\Theta$ umfasst, die eine Steuerung liefert, welche die Sollwerte der Regler (R1, R3) der ersten und dritten Schleife steuert, wobei ein fünfter Regler (R5) verwendet wird.

9. Verfahren gemäß dem vorhergehenden Anspruch, **dadurch gekennzeichnet, dass** besagte Winkelposition in dem Schritt (c) in Abhängigkeit von der Ausgabe des fünften Reglers (R5) geschätzt wird, wobei der fünfte Regler (R5) vorzugsweise versucht, die Differenz OR13 des Produkts aus der Ausgabe OR1 des ersten Reglers (R1) mit dem zweiten Koeffizienten C2 und des Produkts der Ausgabe OR3 des dritten Reglers (R3) mit dem ersten Koeffizienten C1 zu minimieren.

10. Verfahren gemäß dem vorhergehenden Anspruch, **dadurch gekennzeichnet, dass** es einen vorherigen Schritt (i) der Auswahl eines Betriebsmodus aus mindestens einem Modus, der als Ins-Gleichgewicht-Zwingen aller Einstellungen (Force-To-Rebalance toute attitude), FTR TT, bezeichnet wird, in welchem besagter Azimutwinkel $\Theta$ einen manuell ausgewählten Wert aufweist, während die fünfte Regelschleife nicht implementiert ist, und einen Modus, der als Vollwinkel (Whole Angle), WA, bezeichnet wird, in dem die fünfte Regelschleife implementiert ist, umfasst.

11. Verfahren gemäß dem vorhergehenden Anspruch, **dadurch gekennzeichnet, dass** besagte Auswahl eins Betriebsmodus in Abhängigkeit von dem Ergebnis des Vergleichs zwischen der geschätzten Winkelgeschwindigkeit und mindestens einem Schwellenwert erfolgt.

12. Verfahren gemäß dem vorhergehenden Anspruch, **gekennzeichnet durch**:

    - Der Betriebsmodus FTR TT schaltet auf den Betriebsmodus WA um, wenn die geschätzte Winkelgeschwindigkeit über einem ersten Schwellenwert liegt;
    - Der Betriebsmodus WA schaltet auf den Betriebsmodus FTR TT um, wenn die Winkelgeschwindigkeit unter einem zweiten Schwellenwert liegt, der vorzugsweise nahe am ersten Schwellenwert liegt oder mit diesem identisch ist.

13. Vibrierender achsensymmetrischer Gyroskopsensor (1) zur Messung einer Winkelgeschwindigkeit oder einer Rotation um eine sensitive Achse, umfassend:

    - einen Resonator (3), der eine elektromechanische Kopplungsinstrumentierung (31) aufweist, um besagten Resonator gemäß einem ersten Anregungssignal, das aus einer primären Mode der Resonanz stammt, und einem zweiten Anregungssignal, das aus einer sekundären Mode der Resonanz stammt, in Vibration zu versetzen;
    - Datenverarbeitungsmittel (11), die eingerichtet sind zum:

        ∘ Empfangen, von der elektromechanischen Kopplungsinstrumentierung (31), eines ersten Signals zum Erfassen einer Vibration des Resonators (3) gemäß der primären Mode der Resonanz und eines zweiten Signals zum Erfassen einer Vibration des Resonators (3) gemäß der sekundären Mode der Resonanz, wobei jedes des ersten und des zweiten Erfassungssignals eine In-Phase-Komponente und eine Komponente in Quadratur der Phase umfasst;
◦ mindestens vier Kontrollschleifen implementieren, darunter

  ▪ eine erste Schleife der Steuerung der Amplitude der Vibration des Resonators (3) entlang der Achse der primären Mode der Resonanz, wobei ein erster Regler (R1) verwendet wird;
  ▪ eine zweite Schleife der Phasenregelung, die In-Phase- und um 90° phasenverschobene harmonische Referenzsignale der primären Mode und/oder der sekundären Mode erzeugt, was erlaubt, besagte In-Phase- und um 90° phasenverschobenen Komponenten der Erfassungssignale zu trennen, wobei ein zweiter Regler (R2) verwendet wird;
  ▪ eine dritte Schleife der Kompensation der Coriolis-Kräfte aufgrund der genannten Rotation des Resonators (3), die eine Mode der Resonanz senkrecht zu der Vibration anregt, wobei ein dritter Regler (R3) verwendet wird;
  ▪ eine vierte Regelschleife zur Steuerung der Quadratur der besagten Mode der Resonanz senkrecht zu der Vibration des Resonators, wobei ein vierter Regler (R4) verwendet wird;

◦ Schätzen der Winkelgeschwindigkeit und/oder der Winkelposition in Abhängigkeit von den Ausgaben der Regler;

dadurch gekennzeichnet, dass die Vibration durch das erste und das zweite Anregungssignal so beschränkt ist, dass sie einen Azimutwinkel Θ in der orthogonalen Modalbasis der primären und sekundären Moden aufweist, wobei der erste Regler (R1) versucht, die Differenz zwischen der In-Phase-Komponente des ersten Erfassungssignals und dem Produkt aus einer Soll-Amplitude der Vibration des Resonators (3) mit einem ersten Koeffizienten C1, der eine Funktion des Azimutwinkels Θ ist, zu minimieren, und der dritte Regler (R3) versucht, die Differenz zwischen der In-Phase-Komponente des zweiten Erfassungssignals und dem Produkt aus besagter Soll-Amplitude der Vibration des Resonators (3) mit einem zweiten Koeffizienten C2, der eine Funktion des Azimutwinkels Θ ist, zu minimieren, wobei die erste Schleife auch eine Schleife der Kompensation der Coriolis-Kräfte ist und die dritte Schleife auch eine Schleife zur Steuerung der Amplitude des Resonators (3) entlang der Achse des sekundären Mode der Resonanz ist.

14. Computerprogrammprodukt mit Codeanweisungen zur Ausführung eines Verfahrens gemäß einem der Ansprüche 1 bis 12 zur Messung der Winkelgeschwindigkeit und/oder einer Winkelposition entlang einer sensitiven Achse eines vibrierenden achsensymmetrischen Gyroskopsensors (1), wenn besagtes Programm auf einem Computer ausgeführt wird.

15. Speichermedium, das von einer Datenverarbeitungsanlage lesbar ist und auf dem ein Computerprogrammprodukt aufgezeichnet ist, das Codeanweisungen zur Ausführung eines Verfahrens gemäß einem der Ansprüche 1 bis 12 zur Messung der Winkelgeschwindigkeit und/oder einer Winkelposition entlang einer sensiblen Achse eines vibrierenden achsensymmetrischen Gyroskopsensors (1) aufweist.

**Claims**

1. A method for measuring an angular velocity of a rotation and/or an angular position, about a sensitive axis of an axisymmetric vibratory gyroscope sensor (1), comprising the implementation, by means (11) for processing data from the axisymmetric vibratory gyroscope sensor (1), of steps of:

  (a) receiving, from an electromechanical coupling instrument (31) of a resonator (3) of the axisymmetric vibratory gyroscope sensor (1), a first detection signal regarding a vibration of said resonator (3) according to a primary resonance mode, and a second detection signal regarding a vibration of said resonator (3) according to a secondary resonance mode; each of the first and the second detection signal comprising an in-phase component and a phase-quadrature component; said resonator (3) being vibrated via said electromechanical coupling instrument (31) according to a first signal for exciting the primary resonance mode and a second signal for exciting the secondary resonance mode;
  (b) implementing at least four control loops, including:

    ◦ a first loop for controlling the vibration amplitude of the resonator (3) about the primary resonance mode axis, using a first regulator (R1);
    ◦ a second phase-locked loop generating in-phase and phase-quadrature reference harmonic signals of the primary mode and/or secondary mode, for separating said in-phase and phase-quadrature components of the detection signals, using a second regulator (R2);
    ◦ a third loop for compensating for the Coriolis forces due to said rotation of the resonator (3) exciting a resonance mode perpendicular to the vibration, using a third regulator (R3);
∘ a fourth loop for controlling the quadrature of said resonance mode perpendicular to the resonator vibration, using a fourth regulator (R4);

(c) estimating said angular velocity and/or said angular position, as a function of the regulator outputs;

**characterized in that** the vibration is constrained by the first and second excitation signals in such a way as to have an azimuthal angle θ in the orthogonal modal base of the primary and secondary modes, the first regulator (R1) aiming at minimizing the difference between the in-phase component of the first detection signal and the product, by a first coefficient C1 that is function of the azimuthal angle θ, of a setpoint vibration amplitude of the resonator (3), and the third regulator (R3) aiming at minimizing the difference between the in-phase component of the second detection signal and the product, by a second coefficient C2 that is function of the azimuthal angle θ, of said setpoint vibration amplitude of the resonator (3), the first loop being also a Coriolis force compensation loop and the third loop being also a loop for controlling the vibration amplitude of the resonator (3) about the secondary resonance mode axis.

2. The method according to the preceding claim, **characterized in that** the first and second coefficients C1 and C2 satisfy $C1^2+C2^2=1$, and preferably $C1=\cos(\theta)$ and $C2=\sin(\theta)$.

3. The method according to any one of the preceding claims, **characterized in that** the first regulator (R1) and the third regulator (R3) are identical.

4. The method according to any one of the preceding claims, **characterized in that** the second regulator (R2) aims at minimizing the sum between the product, by a fifth coefficient C5 that is function of the azimuthal angle θ, the phase-quadrature component of the first detection signal, and the product, by a sixth coefficient C6 that is function of the azimuthal angle θ, of the phase-quadrature component of the second detection signal.

5. The method according to the preceding claim, **characterized in that** the fifth and sixth coefficients C5 and C6 satisfy $C5^2+C6^2=1$, and preferably C5= C1, and C6=C2.

6. The method according to any one of the preceding claims, **characterized in that** said angular velocity is estimated at step (c) by calculating the difference OR13 of the product by the second coefficient C2 of the output of the first regulator (R1) and the product by the first coefficient C1 of the output of the third regulator (R3).

7. The method according to any one of the preceding claims, **characterized in that** the axisymmetric vibratory gyroscope sensor (1) comprises data storage means (12) storing a table of pre-calculated values of the coefficients C1, C2, C3, C4, C5, C6, C7 and C8 used by the data processing means (11).

8. The method according to any one of the preceding claims, **characterized in that** the step (b) comprises the implementation of a fifth loop for controlling said azimuthal angle θ providing a command piloting the setpoints of the regulators (R1, R3) of the first and third loops, using a fifth regulator (R5).

9. The method according to the preceding claim, **characterized in that** said angular position is estimated at step (c) as a function of the output of the fifth regulator (R5), said fifth regulator (R5) preferably aiming at minimizing the difference OR13 of the product by the second coefficient C2 of the output OR1 of the first regulator (R1) and the product by the first coefficient C1 of the output OR3 of the third regulator (R3).

10. The method according to the preceding claim, **characterized in that** it comprises a previous step (i) of selecting an operating mode among at least one so-called all-attitude Force-To-Rebalance, AA FTR, mode, in which said azimuthal angle θ has a value selected manually, whereas the fifth control loop is not implemented, and a so-called Whole Angle, WA, mode, in which the fifth control loop is implemented.

11. The method according to the preceding claim, **characterized in that** said selection of an operating mode is made as a function of the result of the comparison between the estimated angular velocity and at least one threshold.

12. The method according to the preceding claim, **characterized in that**:

- the AA FTR operating mode switches to the WA operating mode if the estimated angular velocity is higher than a first threshold;
- the WA operating mode switches to the AA FTR operating mode if the angular velocity is lower than a second threshold, preferentially close or identical to the first threshold.

13. An axisymmetric vibratory gyroscope sensor (1) for measuring an angular velocity or a rotation about a sensitive axis, comprising:

- a resonator (3) having an electromechanical coupling instrument (31) for vibrating said resonator according to a first excitation signal coming from a primary resonance mode and a second excitation signal coming from a secondary resonance mode;
- data processing means (11) configured to:

◦ receive, from the electromechanical coupling instrument (31), a first detection signal regarding a vibration of said resonator (3) according to the primary resonance mode, and a second detection signal regarding a vibration of said resonator (3) according to the secondary resonance mode; each of the first and the second detection signal comprising an in-phase component and a phase-quadrature component;
◦ implementing at least four control loops, including:

▪ a first loop for controlling the vibration amplitude of the resonator (3) about the primary resonance mode axis, using a first regulator (R1);
▪ a second phase-locked loop generating in-phase and phase-quadrature reference harmonic signals of the primary mode and/or secondary mode, for separating said in-phase and phase-quadrature components of the detection signals, using a second regulator (R2);
▪ a third loop for compensating for the Coriolis forces due to said rotation of the resonator (3) exciting a resonance mode perpendicular to the vibration, using a third regulator (R3);
▪ a fourth loop for controlling the quadrature of said resonance mode perpendicular to the resonator vibration, using a fourth regulator (R4);

◦ estimating said angular velocity and/or the angular position as a function of the regulator outputs;

**characterized in that** the vibration is constrained by the first and second excitation signals in such a way as to have an azimuthal angle θ in the orthogonal modal base of the primary and secondary modes, the first regulator (R1) aiming at minimizing the difference between the in-phase component of the first detection signal and the product, by a first coefficient C1 that is function of the azimuthal angle θ, of a setpoint vibration amplitude of the resonator (3), and the third regulator (R3) aiming at minimizing the difference between the in-phase component of the second detection signal and the product, by a second coefficient C2 that is function of the azimuthal angle θ, of said setpoint vibration amplitude of the resonator (3), the first loop being also a Coriolis force compensation loop and the third loop being also a loop for controlling the vibration amplitude of the resonator (3) about the secondary resonance mode axis.

14. A computer program product comprising code instructions for executing a method according to one of claims 1 to 12 for measuring the angular velocity and/or an angular position about a sensitive axis of an axisymmetric vibratory gyroscope sensor (1), when said program is executed on a computer.

15. A computer-readable storage means on which is recorded a computer program product comprising code instructions for executing a method according to one of claims 1 to 12 for measuring the angular velocity and/or an angular position about a sensitive axis of an axisymmetric vibratory gyroscope sensor (1).

**FIG. 1**

**FIG. 2**

FIG. 3

FIG. 4

**FIG. 5**

FIG. 6

FIG. 7

**FIG. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3096111 A1

**Littérature non-brevet citée dans la description**

- **WANG XU et al.** The modeling of hemispherical resonator gyro and its space applications. *SEVENTH INTERNATIONAL SYMPOSIUM ON PRECISION ENGINEERING MEASUREMENTS AND INSTRUMENTATION, SPIE, 1000 20TH ST. BELLINGHAM WA 98225-6705 USA,* 01 Décembre 2011, vol. 8321 (1), 1-9